# EUROPEAN PATENT APPLICATION

(11) **EP 2 835 964 A2**
(43) Date of publication of application: **11.02.2015**
(21) Application number: 14002724.4
(22) Date of filing: 04.08.2014
(51) Int. Cl.: H04N 5/232

(54) **Mobile terminal and controlling method thereof**

(30) Priority: 09.08.2013 KR 20130095053
(71) Applicant: LG Electronics, Inc., Seoul 150-721 (KR)
(72) Inventor: Kiseon, Lee, 137-893 Seoul (KR); Juha, Hyun, 137-893 Seoul (KR); Yoonseok, Yang, 137-893 Seoul (KR); Byungkee, Chae, 137-893 Seoul (KR); Yung, Kim, 137-893 Seoul (KR)
(74) Representative: Beyer, Andreas

(57) **Abstract**

The present invention discloses a mobile terminal capable of quickly capturing a picture without displaying a preview image and a method of controlling therefor. The mobile terminal according to the present invention includes a camera configured to capture a picture, a display configured to display information, and a controller configured to control the camera to capture a picture with skipping to display a preview image inputted via the camera in response to a user input, and control the captured picture to be displayed on the display together with the preview image after the picture is captured.

## Description

### BACKGROUND OF THE INVENTION

### Field of the Invention

The present invention relates to a mobile terminal capable of taking pictures without displaying a preview image of a camera and a method of controlling therefor.

### Discussion of the Related Art

A mobile terminal is a device which may be configured to perform various functions. Examples of such functions include data and voice communications, capturing images and video via a camera, recording audio, playing music files and outputting music via a speaker system, and displaying images and video on a display.

Generally, terminals can be classified into mobile terminals and stationary terminals according to a presence or non-presence of mobility. And, the mobile terminals can be further classified into handheld terminals and vehicle mount terminals according to availability for hand-carry.

There are ongoing efforts to support and increase the functionality of mobile terminals. Such efforts include software and hardware improvements, as well as changes and improvements in the structural components which form the mobile terminal.

In general, a camera is installed in a mobile terminal for the purpose of performing a video call and taking pictures. When a user activates the camera to take pictures, the camera displays a preview image in a display to provide the user with a composition of a picture to be taken and information on a subject, which will be included in the picture to be taken.

Yet, if the user takes a picture while checking a preview image, it may take time, which is not trivial, until an actual picture is taken no matter how fast a processor may be. As an example, since a time taken for activating the camera and displaying the preview image and a time taken for capturing an actual picture after inputting a capturing command are nontrivial, it may take minimum 2 ∼ 3 seconds to take a picture no matter how fast the user intends to take a picture. Moreover, if the user further performs such a process as adjusting a configuration value of the camera in accordance with a capturing environment or setting a subject to be taken to a focus area, the time taken for capturing a picture cannot but increase.

Hence, a current mobile terminal may be inappropriate for capturing a subject which is needed to be captured in a moment.

### SUMMARY OF THE INVENTION

Accordingly, embodiments of the present invention are directed to a mobile terminal and controlling method thereof that substantially obviate one or more problems due to limitations and disadvantages of the related art.

The present invention is contrived by the aforementioned necessity. An object of the present invention is to provide a mobile terminal for enhancing user convenience.

Specifically, an object of the present invention is to provide a mobile terminal capable of quickly capturing pictures without displaying a preview image.

Moreover, another object of the present invention is to provide a mobile terminal capable of automatically focusing a camera on a subject or adjusting a camera setting to correspond to an intention of a user.

To achieve these objects and other advantages and in accordance with the purpose of the invention, as embodied and broadly described herein, according to one embodiment, a mobile terminal includes a camera configured to capture a picture, a display configured to display information, and a controller configured to control the camera to capture a picture with skipping to display a preview image inputted via the camera in response to a user input, and control the captured picture to be displayed on the display together with the preview image after the picture is captured.

To further achieve these objects and other advantages and in accordance with the purpose of the invention, as embodied and broadly described herein, according to one embodiment, a method of controlling a mobile terminal includes receiving a user input, in response to receiving the user input, capturing a picture with skipping to display a preview image inputted via the camera, and displaying the captured picture together with the preview image after the picture is captured.

Effects obtainable from the present invention may be non-limited by the above mentioned effect. And, other unmentioned effects can be clearly understood from the following description by those having ordinary skill in the technical field to which the present invention pertains.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. The above and other aspects, features, and advantages of the present invention will become more apparent upon consideration of the following description of preferred embodiments, taken in conjunction with the accompanying drawing figures. In the drawings:
FIG. 1 is a block diagram of a mobile terminal according to one embodiment of the present invention;
FIG. 2 is a front perspective diagram of a mobile terminal according to one embodiment of the present invention;
FIG. 3 is a rear perspective diagram of a mobile terminal according to one embodiment of the present invention;
FIG. 4 is a flowchart for an operation of a mobile terminal according to one example of the present invention;
FIG. 5a to FIG. 5f are diagrams for explaining various examples of inputting a first user input and a second user input;
FIG. 6 is a diagram for explaining an operation of a mobile terminal when a first user input is received;
FIG. 7a and FIG. 7b are diagrams for explaining an operation of a mobile terminal when a second user input is received;
FIG. 8a to FIG. 8c are diagrams for simultaneously displaying a captured picture and a preview image when a picture is captured by a second user input;
FIG. 9a to FIG. 9e are diagrams for explaining an example of automatically adjusting a focus when a picture is captured by a second user input;
FIG. 10a and FIG. 10b are diagrams for explaining an example of automatically adjusting a camera setting when a picture is captured by a second user input;
FIG. 11 is a diagram for explaining an example of capturing a picture in a capturing mode indicated by a second user input;
FIG. 12a and FIG. 12b are diagrams for explaining an example of capturing a picture by selecting at least one of a front camera and a rear camera according to environment of capturing the picture in accordance with a second user input;
FIG. 13a and FIG. 13b is a diagram for an example of an output of a mobile terminal when a plurality of pictures are captured by a second user input;
FIG. 14 is a diagram for explaining an example of capturing a plurality of pictures in a manner of varying a focal length;
FIG. 15 is a diagram for explaining an example that a captured picture is distorted;
FIG. 16 is a diagram for explaining an operation of a mobile terminal when a first user input or a second user input is inputted in the middle of executing an application;
FIG. 17 is a diagram for explaining an operation of a mobile terminal when a picture is captured in the middle of executing a plurality of applications at the same time;
FIG. 18 is a diagram for explaining an example of inserting a captured picture into a position in which a preview image is outputted;
FIG. 19 is a diagram for an example of configuring a captured picture as a link object of data selected by a user;
FIG. 20 and FIG. 21 are diagrams for explaining an example of adding a captured picture to a schedule;
FIG. 22 and FIG. 23 are diagrams for an example of capturing a picture in a manner of focusing into an object indicated by data selected by a user;
FIG. 24 is a diagram for explaining an operation of a mobile terminal in case that a plurality of objects are indicated by data selected by a user;
FIG. 25 is a diagram for an example that a preview image of a front camera and a preview image of a rear camera are simultaneously outputted when a first user input is inputted;
FIG. 26 is a diagram for an example of outputting a captured picture in case of capturing a picture using a front camera and a rear camera at the same time;
FIG. 27 is a diagram for explaining an example of capturing a picture with an output of a display in the background;
FIG. 28 and FIG. 29 are diagrams for a UI which is provided to an editing screen of a captured picture.

### DETAILED DESCRIPTION OF THE INVENTION

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

As used herein, the suffixes 'module', 'unit' and 'part' are used for elements in order to facilitate the disclosure only. Therefore, significant meanings or roles are not given to the suffixes themselves and it is understood that the 'module', 'unit' and 'part' can be used together or interchangeably.

The present invention can be applicable to a various types of mobile terminals. Examples of such terminals include mobile phones, user equipments, smart phones, digital broadcast receivers, personal digital assistants, laptop computers, portable multimedia players (PMP), navigators and the like.

Yet, it is apparent to those skilled in the art that a configuration according to an embodiment disclosed in this specification is applicable to such a fixed terminal as a digital TV, a desktop computer and the like as well as a mobile terminal.

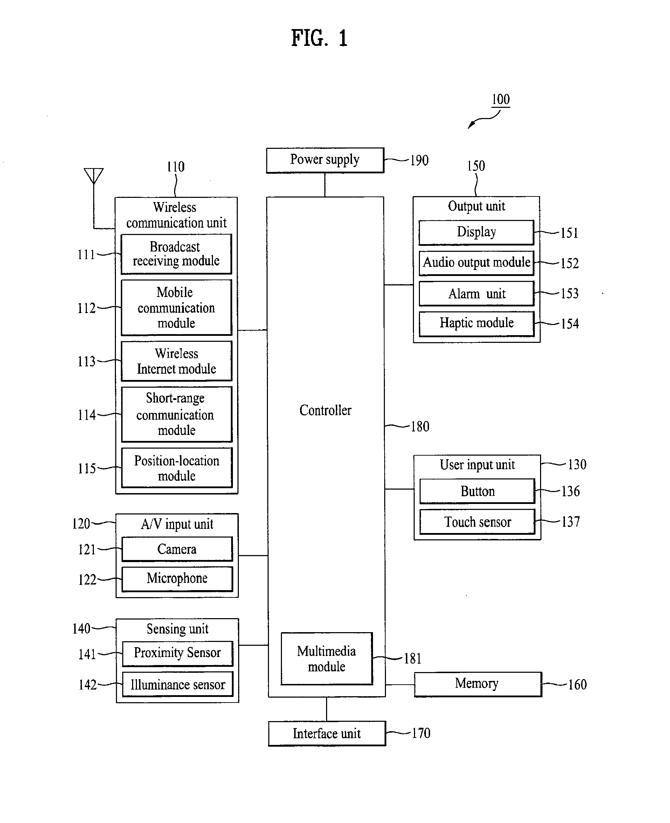

Fig. 1 is a block diagram of a mobile terminal 100 in accordance with an embodiment of the present invention. Fig. 1 shows the mobile terminal 100 according to one embodiment of the present invention includes a wireless communication unit 110, an A/V (audio/video) input unit 120, a user input unit 130, a sensing unit 140, an output unit 150, a memory 160, an interface unit 170, a controller 180, a power supply unit 190 and the like. FIG. 1 shows the mobile terminal 100 having various components, but it is understood that implementing all of the illustrated components is not a requirement. Greater or fewer components may alternatively be implemented.

In the following description, the above elements of the mobile terminal 100 are explained in sequence.

First of all, the wireless communication unit 110 typically includes one or more components which permits wireless communication between the mobile terminal 100 and a wireless communication system or network within which the mobile terminal 100 is located. For instance, the wireless communication unit 110 can include a broadcast receiving module 111, a mobile communication module 112, a wireless internet module 113, a short-range communication module 114, a position-location module 115 and the like.

The broadcast receiving module 111 receives a broadcast signal and/or broadcast associated information from an external broadcast managing server via a broadcast channel. The broadcast channel may include a satellite channel and a terrestrial channel. At least two broadcast receiving modules 111 can be provided to the mobile terminal 100 in pursuit of simultaneous receptions of at least two broadcast channels or broadcast channel switching facilitation.

The broadcast managing server generally refers to a server which generates and transmits a broadcast signal and/or broadcast associated information or a server which is provided with a previously generated broadcast signal and/or broadcast associated information and then transmits the provided signal or information to a terminal. The broadcast signal may be implemented as a TV broadcast signal, a radio broadcast signal, and a data broadcast signal, among others. If desired, the broadcast signal may further include a broadcast signal combined with a TV or radio broadcast signal.

The broadcast associated information includes information associated with a broadcast channel, a broadcast program, a broadcast service provider, etc. And, the broadcast associated information can be provided via a mobile communication network. In this case, the broadcast associated information can be received by the mobile communication module 112.

The broadcast associated information can be implemented in various forms. For instance, broadcast associated information may include an electronic program guide (EPG) of digital multimedia broadcasting (DMB) and electronic service guide (ESG) of digital video broadcast-handheld (DVB-H).

The broadcast receiving module 111 may be configured to receive broadcast signals transmitted from various types of broadcast systems. By nonlimiting example, such broadcasting systems include digital multimedia broadcasting-terrestrial (DMB-T), digital multimedia broadcasting-satellite (DMB-S), digital video broadcast-handheld (DVB-H), Convergence of Broadcasting and Mobile Service(DVB-CBMS), Open Mobile Alliance-BroadCAST(OMA-BCAST), China Multimedia Mobile Broadcasting (CMMB), Mobile Broadcasting Business Management System(MBBMS), the data broadcasting system known as media forward link only (MediaFLO®) and integrated services digital broadcast-terrestrial (ISDB-T). Optionally, the broadcast receiving module 111 can be configured suitable for other broadcasting systems as well as the above-explained digital broadcasting systems.

The broadcast signal and/or broadcast associated information received by the broadcast receiving module 111 may be stored in a suitable device, such as a memory 160.

The mobile communication module 112 transmits/receives wireless signals to/from one or more network entities (e.g., base station, external terminal, server, etc.) via a mobile network such as GSM (Global System for Mobile communications), CDMA (Code Division Multiple Access), WCDMA (Wideband CDMA) and so on. Such wireless signals may represent audio, video, and data according to text/multimedia message transceivings, among others.

The wireless internet module 113 supports Internet access for the mobile terminal 100. This module may be internally or externally coupled to the mobile terminal 100. In this case, the wireless Internet technology can include WLAN(Wireless LAN) (Wi-Fi), Wibro (Wireless broadband), Wimax (World Interoperability for Microwave Access), HSDPA(High Speed Downlink Packet Access), GSM, CDMA, WCDMA, LTE (Long Term Evolution) etc.

Wireless internet access by Wibro, HSPDA, GSM, CDMA, WCDMA, LTE or the like is achieved via a mobile communication network. In this aspect, the wireless internet module 113 configured to perform the wireless internet access via the mobile communication network can be understood as a sort of the mobile communication module 112.

The short-range communication module 114 facilitates relatively short-range communications. Suitable technologies for implementing this module include radio frequency identification (RFID), infrared data association (IrDA), ultra-wideband (UWB), as well at the networking technologies commonly referred to as Bluetooth and ZigBee, to name a few.

The position-location module 115 identifies or otherwise obtains the location of the mobile terminal 100. If desired, this module may be implemented with a global positioning system (GPS) module. According to the current technology, the GPS module 115 is able to precisely calculate current 3-dimensional position information based on at least one of longitude, latitude and altitude and direction (or orientation) by calculating distance information and precise time information from at least three satellites and then applying triangulation to the calculated information. Currently, location and time informations are calculated using three satellites, and errors of the calculated location position and time informations are then amended using another satellite. Besides, the GPS module 115 is able to calculate speed information by continuously calculating a real-time current location.

Referring to FIG. 1, the audio/video (A/V) input unit 120 is configured to provide audio or video signal input to the mobile terminal 100. As shown, the A/V input unit 120 includes a camera 121 and a microphone 122. The camera 121 receives and processes image frames of still pictures or video, which are obtained by an image sensor in a video call mode or a photographing mode. And, the processed image frames can be displayed on the display 151.

The image frames processed by the camera 121 can be stored in the memory 160 or can be externally transmitted via the wireless communication unit 110. Optionally, at least two cameras 121 can be provided to the mobile terminal 100 according to environment of usage.

The microphone 122 receives an external audio signal while the portable device is in a particular mode, such as phone call mode, recording mode and voice recognition. This audio signal is processed and converted into electric audio data. The processed audio data is transformed into a format transmittable to a mobile communication base station via the mobile communication module 112 in case of a call mode. The microphone 122 typically includes assorted noise removing algorithms to remove noise generated in the course of receiving the external audio signal.

The user input unit 130 generates input data responsive to user manipulation of an associated input device or devices. Examples of such devices include a button 136 provided to front/rear/lateral side of the mobile terminal 100 and a touch sensor (constant pressure/electrostatic) 137 and may further include a key pad, a dome switch, a jog wheel, a jog switch and the like [not shown in the drawing].

The sensing unit 140 provides sensing signals for controlling operations of the mobile terminal 100 using status measurements of various aspects of the mobile terminal. For instance, the sensing unit 140 may detect an open/close status of the mobile terminal 100, relative positioning of components (e.g., a display and keypad) of the mobile terminal 100, a change of position of the mobile terminal 100 or a component of the mobile terminal 100, a presence or absence of user contact with the mobile terminal 100, orientation or acceleration/deceleration of the mobile terminal 100. By nonlimiting example, such sensing unit 140 include, gyro sensor, accelerate sensor, geomagnetic sensor.

As an example, consider the mobile terminal 100 being configured as a slide-type mobile terminal. In this configuration, the sensing unit 140 may sense whether a sliding portion of the mobile terminal is open or closed. Other examples include the sensing unit 140 sensing the presence or absence of power provided by the power supply 190, the presence or absence of a coupling or other connection between the interface unit 170 and an external device. And, the sensing unit 140 can include a proximity sensor 141.

The output unit 150 generates outputs relevant to the senses of sight, hearing, touch and the like. And, the output unit 150 includes the display 151, an audio output module 152, an alarm unit 153, and a haptic module 154 and the like.

The display 151 is typically implemented to visually display (output) information associated with the mobile terminal 100. For instance, if the mobile terminal is operating in a phone call mode, the display will generally provide a user interface (UI) or graphical user interface (GUI) which includes information associated with placing, conducting, and terminating a phone call. As another example, if the mobile terminal 100 is in a video call mode or a photographing mode, the display 151 may additionally or alternatively display images which are associated with these modes, the UI or the GUI.

The display module 151 may be implemented using known display technologies including, for example, a liquid crystal display (LCD), a thin film transistor-liquid crystal display (TFT-LCD), an organic light-emitting diode display (OLED), a flexible display and a three-dimensional display. The mobile terminal 100 may include one or more of such displays.

Some of the above displays can be implemented in a transparent or optical transmittive type, which can be named a transparent display. As a representative example for the transparent display, there is TOLED (transparent OLED) or the like. A rear configuration of the display 151 can be implemented in the optical transmittive type as well. In this configuration, a user is able to see an object in rear of a terminal body via the area occupied by the display 151 of the terminal body.

At least two displays 151 can be provided to the mobile terminal 100 in accordance with the implemented configuration of the mobile terminal 100. For instance, a plurality of displays can be arranged on a single face of the mobile terminal 100 in a manner of being spaced apart from each other or being built in one body. Alternatively, a plurality of displays can be arranged on different faces of the mobile terminal 100.

In case that the display 151 and the touch sensor 137 configures a mutual layer structure (hereinafter called 'touch screen'), it is able to use the display 151 as an input device as well as an output device. In this case, the touch sensor can be configured as a touch film, a touch sheet, a touchpad or the like.

The touch sensor 137 can be configured to convert a pressure applied to a specific portion of the display 151 or a variation of a capacitance generated from a specific portion of the display 151 to an electric input signal. Moreover, it is able to configure the touch sensor 137 to detect a pressure of a touch as well as a touched position or size.

If a touch input is made to the touch sensor 137, signal(s) corresponding to the touch is transferred to a touch controller. The touch controller processes the signal(s) and then transfers the processed signal(s) to the controller 180. Therefore, the controller 180 is able to know whether a prescribed portion of the display 151 is touched.

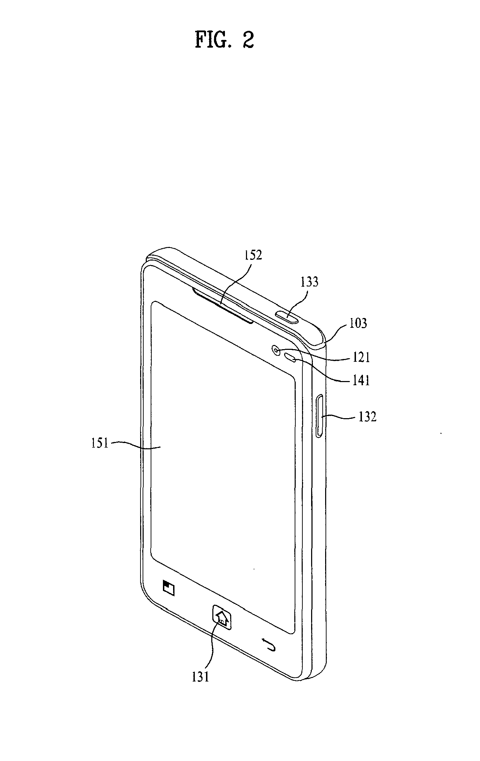

Referring to FIG. 2, a proximity sensor (141) can be provided to an internal area of the mobile terminal 100 enclosed by the touchscreen or around the touchscreen. The proximity sensor is the sensor that detects a presence or non-presence of an object approaching a prescribed detecting surface or an object existing around the proximity sensor using an electromagnetic field strength or infrared ray without mechanical contact. Hence, the proximity sensor has durability longer than that of a contact type sensor and also has utility wider than that of the contact type sensor.

The proximity sensor can include one of a transmittive photoelectric sensor, a direct reflective photoelectric sensor, a mirror reflective photoelectric sensor, a radio frequency oscillation proximity sensor, an electrostatic capacity proximity sensor, a magnetic proximity sensor, an infrared proximity sensor and the like. In case that the touchscreen includes the electrostatic capacity proximity sensor, it is configured to detect the proximity of a pointer using a variation of electric field according to the proximity of the pointer. In this case, the touchscreen (touch sensor) can be classified as the proximity sensor.

For clarity and convenience of the following description, as a pointer becomes proximate to a touchscreen without coming into contact with the touchscreen, if the pointer is perceived as situated over the touchscreen, such an action shall be named 'proximity touch'. If a pointer actually comes into contact with a touchscreen, such an action shall be named 'contact touch'. A proximity-touched position over the touchscreen with the pointer may mean a position at which the pointer vertically opposes the touchscreen when the touchscreen is proximity-touched with the pointer.

The proximity sensor detects a proximity touch and a proximity touch pattern (e.g., a proximity touch distance, a proximity touch duration, a proximity touch position, a proximity touch shift state, etc.). And, information corresponding to the detected proximity touch action and the detected proximity touch pattern can be outputted to the touchscreen.

The audio output module 152 functions in various modes including a call-receiving mode, a call-placing mode, a recording mode, a voice recognition mode, a broadcast reception mode and the like to output audio data which is received from the wireless communication unit 110 or is stored in the memory 160. During operation, the audio output module 152 outputs audio relating to a particular function (e.g., call received, message received, etc.). The audio output module 152 is often implemented using one or more speakers, buzzers, other audio producing devices, and combinations thereof.

The alarm unit 153 is output a signal for announcing the occurrence of a particular event associated with the mobile terminal 100. Typical events include a call received event, a message received event and a touch input received event. The alarm unit 153 is able to output a signal for announcing the event occurrence by way of vibration as well as video or audio signal. The video or audio signal can be outputted via the display 151 or the audio output unit 152. Hence, the display 151 or the audio output module 152 can be regarded as a part of the alarm unit 153.

The haptic module 154 generates various tactile effects that can be sensed by a user. Vibration is a representative one of the tactile effects generated by the haptic module 154. Strength and pattern of the vibration generated by the haptic module 154 are controllable. For instance, different vibrations can be outputted in a manner of being synthesized together or can be outputted in sequence.

The haptic module 154 is able to generate various tactile effects as well as the vibration. For instance, the haptic module 154 generates the effect attributed to the arrangement of pins vertically moving against a contact skin surface, the effect attributed to the injection/suction power of air though an injection/suction hole, the effect attributed to the skim over a skin surface, the effect attributed to the contact with electrode, the effect attributed to the electrostatic force, the effect attributed to the representation of hold/cold sense using an endothermic or exothermic device and the like.

The haptic module 154 can be implemented to enable a user to sense the tactile effect through a muscle sense of finger, arm or the like as well as to transfer the tactile effect through a direct contact. Optionally, at least two haptic modules 154 can be provided to the mobile terminal 100 in accordance with the corresponding configuration type of the mobile terminal 100.

The memory unit 160 is generally used to store various types of data to support the processing, control, and storage requirements of the mobile terminal 100. Examples of such data include program instructions for applications operating on the mobile terminal 100, contact data, phonebook data, messages, audio, still pictures (or photo), moving pictures, etc. And, a recent use history or a cumulative use frequency of each data (e.g., use frequency for each phonebook, each message or each multimedia) can be stored in the memory unit 160. Moreover, data for various patterns of vibration and/or sound outputted in case of a touch input to the touchscreen can be stored in the memory unit 160.

The memory 160 may be implemented using any type or combination of suitable volatile and non-volatile memory or storage devices including hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory, XD memory, etc.), or other similar memory or data storage device. And, the mobile terminal 100 is able to operate in association with a web storage for performing a storage function of the memory 160 on Internet.

The interface unit 170 is often implemented to couple the mobile terminal 100 with external devices. The interface unit 170 receives data from the external devices or is supplied with the power and then transfers the data or power to the respective elements of the mobile terminal 100 or enables data within the mobile terminal 100 to be transferred to the external devices. The interface unit 170 may be configured using a wired/wireless headset port, an external charger port, a wired/wireless data port, a memory card port, a port for coupling to a device having an identity module, audio input/output ports, video input/output ports, an earphone port and/or the like.

The identity module is the chip for storing various kinds of information for authenticating a use authority of the mobile terminal 100 and can include User Identify Module (UIM), Subscriber Identify Module (SIM), Universal Subscriber Identity Module (USIM) and/or the like. A device having the identity module (hereinafter called 'identity device') can be manufactured as a smart card. Therefore, the identity device is connectible to the mobile terminal 100 via the corresponding port.

When the mobile terminal 110 is connected to an external cradle, the interface unit 170 becomes a passage for supplying the mobile terminal 100 with a power from the cradle or a passage for delivering various command signals inputted from the cradle by a user to the mobile terminal 100. Each of the various command signals inputted from the cradle or the power can operate as a signal enabling the mobile terminal 100 to recognize that it is correctly loaded in the cradle.

The controller 180 typically controls the overall operations of the mobile terminal 100. For example, the controller 180 performs the control and processing associated with voice calls, data communications, video calls, etc. The controller 180 may include a multimedia module 181 that provides multimedia playback. The multimedia module 181 may be configured as part of the controller 180, or implemented as a separate component.

Moreover, the controller 180 is able to perform a pattern (or image) recognizing process for recognizing a writing input and a picture drawing input carried out on the touchscreen as characters or images, respectively.

The power supply unit 190 provides power required by the various components for the mobile terminal 100. The power may be internal power, external power, or combinations thereof.

A battery may include a built-in rechargeable battery and may be detachably attached to the terminal body for a charging and the like. A connecting port may be configured as one example of the interface 170 via which an external charger for supplying a power of a battery charging is electrically connected.

Various embodiments described herein may be implemented in a computer-readable medium using, for example, computer software, hardware, or some combination thereof.

For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. Such embodiments may also be implemented by the controller 180.

For a software implementation, the embodiments described herein may be implemented with separate software modules, such as procedures and functions, each of which perform one or more of the functions and operations described herein. The software codes can be implemented with a software application written in any suitable programming language and may be stored in memory such as the memory 160, and executed by a controller or processor, such as the controller 180.

FIG. 2 is a front perspective diagram of a mobile terminal according to one embodiment of the present invention.

The mobile terminal 100 shown in the drawing has a bar type terminal body. Yet, the mobile terminal 100 may be implemented in a variety of different configurations. Examples of such configurations include folder-type, slide-type, rotational-type, swing-type and combinations thereof. For clarity, further disclosure will primarily relate to a bar-type mobile terminal 100. However such teachings apply equally to other types of mobile terminals.

Referring to FIG. 2A, the mobile terminal 100 includes a case (101, 102, 103) configuring an exterior thereof. In the present embodiment, the case can be divided into a front case 101 and a rear case 102. Various electric/electronic parts are loaded in a space provided between the front and rear cases 101 and 102.

Occasionally, electronic components can be mounted on a surface of the rear case 102. The electronic part mounted on the surface of the rear case 102 may include such a detachable part as a battery, a USIM card, a memory card and the like. In doing so, the rear case 102 may further include a backside cover 103 configured to cover the surface of the rear case 102. In particular, the backside cover 103 has a detachable configuration for user's convenience. If the backside cover 103 is detached from the rear case 102, the surface of the rear case 102 is exposed.

Referring to FIG. 2, if the backside cover 103 is attached to the rear case 102, a lateral side of the rear case 102 may be exposed in part. If a size of the backside cover 103 is decreased, a rear side of the rear case 102 may be exposed in part. If the backside cover 103 covers the whole rear side of the rear case 102, it may include an opening 103' configured to expose a camera 121' or an audio output unit 152' externally.

The cases 101, 102 and 103 are formed by injection molding of synthetic resin or can be formed of metal substance such as stainless steel (STS), titanium (Ti) or the like for example.

A display 151, an audio output unit 152, a camera 121, user input units 130/131 and 132, a microphone 122, an interface 180 and the like can be provided to the case 101 or 102.

The display 151 occupies most of a main face of the front case 101. The audio output unit 152 and the camera 121 are provided to an area adjacent to one of both end portions of the display 151, while the user input unit 131 and the microphone 122 are provided to another area adjacent to the other end portion of the display 151. The user input unit 132 and the interface 170 can be provided to lateral sides of the front and rear cases 101 and 102.

The input unit 130 is manipulated to receive a command for controlling an operation of the terminal 100. And, the input unit 130 is able to include a plurality of manipulating units 131 and 132. The manipulating units 131 and 132 can be named a manipulating portion and may adopt any mechanism of a tactile manner that enables a user to perform a manipulation action by experiencing a tactile feeling. Content inputted by the first or second manipulating unit 131 or 132 can be diversely set. For instance, such a command as start, end, scroll and the like is inputted to the first manipulating unit 131. And, a command for a volume adjustment of sound outputted from the audio output unit 152 and the like can be inputted to the second manipulating unit 132, a command for a switching to a touch recognizing mode of the display 151 and the like can be inputted to the second manipulating unit 133.

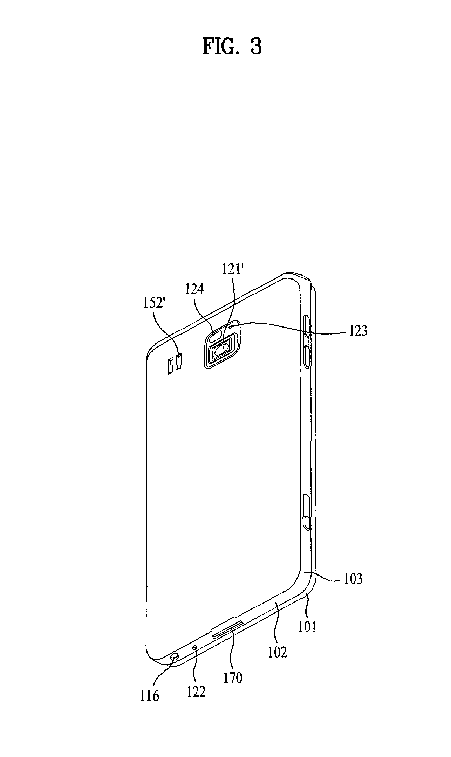

FIG. 3 is a perspective diagram of a backside of the terminal shown in FIG. 2.

Referring to FIG. 3, a camera 121' can be additionally provided to a backside of the terminal body, and more particularly, to the rear case 102. The camera 121 has a photographing direction that is substantially opposite to that of the front camera 121 shown in FIG. 2 and may have pixels differing from those of the front camera 121.

Preferably, for instance, the front camera 121 has low pixels enough to capture and transmit a picture of user's face for a video call, while the rear camera 121' has high pixels for capturing a general subject for photography without transmitting the captured subject. And, each of the cameras 121 and 121' can be installed at the terminal body to be rotated or popped up.

A flash 123 and a mirror 124 are additionally provided adjacent to the camera 121'. The flash 123 projects light toward a subject in case of photographing the subject using the camera 121'. In case that a user attempts to take a picture of the user (self-photography) using the camera 121', the mirror 124 enables the user to view user's face reflected by the mirror 124.

An additional audio output unit 152' can be provided to the backside of the terminal body. The additional audio output unit 152' is able to implement a stereo function together with the former audio output unit 152 shown in FIG. 2 and may be used for implementation of a speakerphone mode in talking over the terminal.

A broadcast signal receiving antenna 116 can be additionally provided to the lateral side of the terminal body as well as an antenna for communication or the like. The antenna 116 constructing a portion of the broadcast receiving module 111 shown in FIG. 1 can be retractably provided to the terminal body.

For clarity, assume that the mobile terminal 100 according to the present invention includes at least one of the configuration elements depicted in FIG. 1. Specifically, assume that the mobile terminal 100 according to the present invention includes the camera 121, the sensing unit 140, the display 151, the memory 160 and the controller 180 among the configuration elements depicted in FIG. 1. In some cases, it may assume that the mobile terminal 100 according to the present invention further includes the wireless communication unit 110 and the microphone 122.

The mobile terminal 100 according to the present invention may include a single camera 121 or may include the front camera 121 and the rear camera 121' as depicted in the examples of FIG. 2 and FIG. 3. Although it is not depicted, it is apparent that the mobile terminal 100 is equipped with two or more cameras 121.

And, if the display 151 of the mobile terminal 100 according to the present invention corresponds to a touch screen, which plays a role of an input device for receiving a user input as well as an output device for outputting information, the present invention may be more easily implemented. Hence, assume that the display 151 corresponds to the touch screen in the following description. Yet, it is not mandatory that the display 151 according to the present invention corresponds to the touch screen. If the mobile terminal 100 according to the present invention does not correspond to the touch screen, the mobile terminal 100 may receive a user input via separate input devices configured to receive the user input (of course, although the display 151 corresponds to the touch screen, the mobile terminal can include separate input devices except the touch screen).

The mobile terminal 100 according to the present invention is explained in detail with reference to drawings in the following.

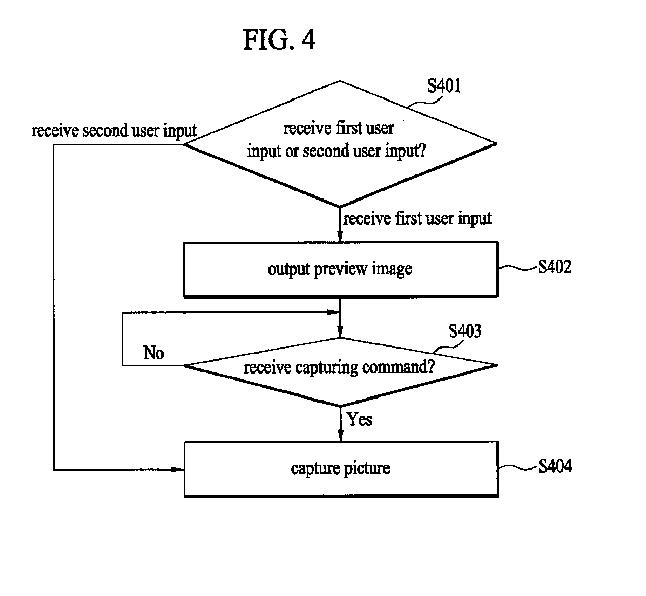

FIG. 4 is a flowchart for an operation of the mobile terminal 100 according to one example of the present invention. Referring to FIG. 4, if a user input is received on a button of the camera 121 [S401], the controller 180 controls a preview image of the camera to be outputted or can control a picture to be immediately captured without outputting the preview image of the camera. Specifically, if a first user input is received from a user, the controller 180 controls the preview image of the camera to be outputted in the display 151 [S402]. On the contrary, if a second user input is received from the user, the controller can control a picture to be taken without outputting the preview image of the camera [S404]. In this case, the preview image of the camera may indicate data obtained by performing a digital processing on an image inputted to the camera in real-time. If the preview image of the camera is outputted by receiving the first user input, the controller 180 can take a picture [S404] when a capturing command is inputted from the user only [S403]. Unlike a case of receiving the first user input, if the second user input is received, since a process of outputting the preview image of the camera and a process of receiving the capturing command while outputting the preview image of the camera 121 can be omitted, there is a merit in that a picture can be quickly captured.

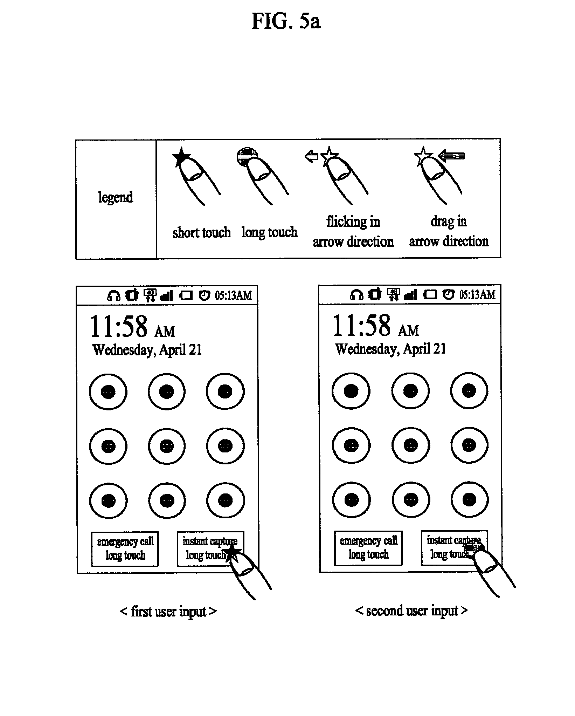

In this case, various methods can be applied to the first and the second user input. Regarding this, it shall be described with reference to FIG. 5a to FIG. 5f in the following.

FIG. 5a to FIG. 5f are diagrams for explaining various examples of inputting a first user input and a second user input.

As depicted in an example of FIG. 5a, one of the first user input and the second user input may correspond to a short touch touching a camera 121 icon (i.e., touching the camera 121 icon with a pointer and immediately releasing a contact of the pointer) and the other one may correspond to a long touch touching the camera 121 icon (i.e., maintaining a state of touching the camera 121 icon for more than a predetermined time).

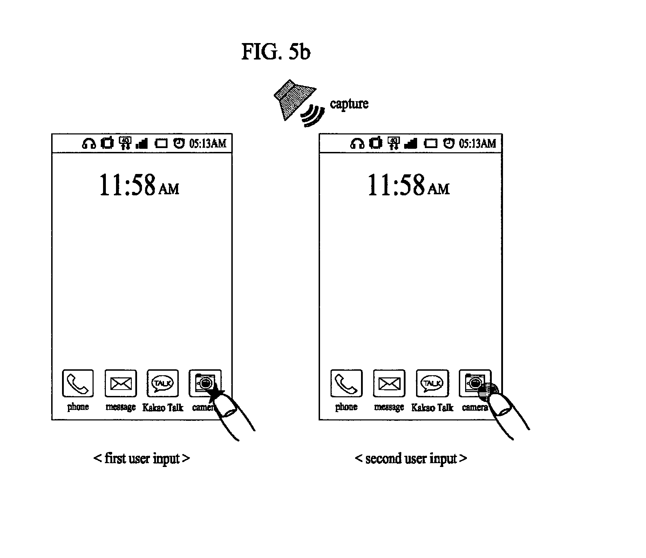

As a different example, as depicted in an example FIG. 5b, one of the first user input and the second user input may correspond to the short touch touching the camera 121 icon and the other one may correspond to an input of a voice command while the touch of the camera 121 icon is maintained.

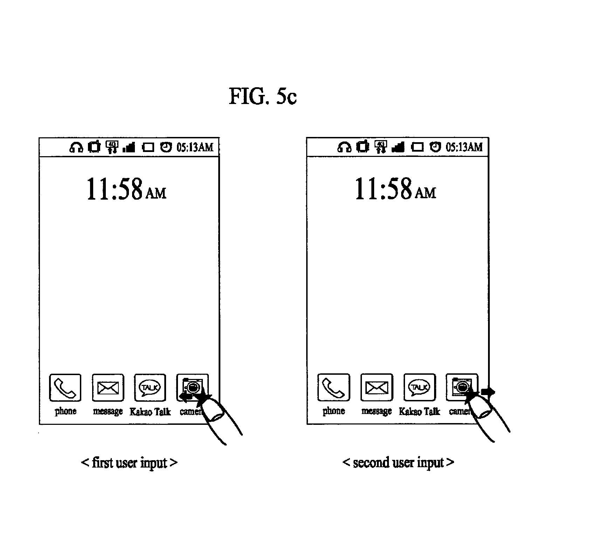

As depicted in an example FIG. 5c, one of the first user input and the second user input may correspond to a flicking, which flicks a pointer into a first direction after touching the camera 121 icon and the other one may correspond to a flicking, which flicks the pointer into a second direction after touching the camera 121 icon.

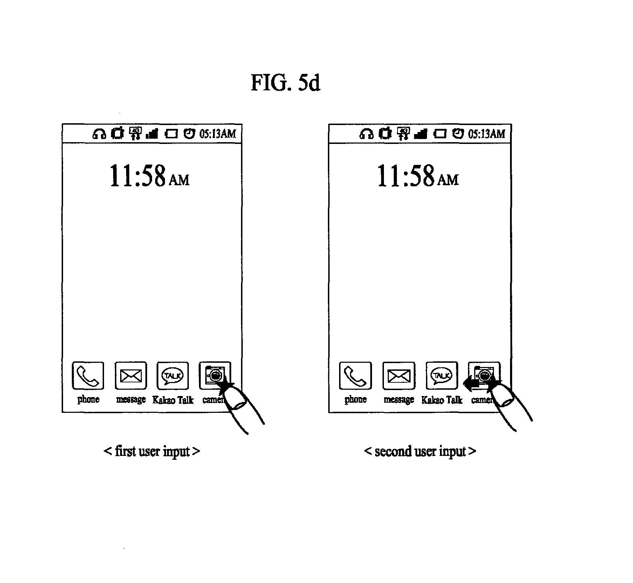

As a different example, as depicted in FIG. 5d, one of the first user input and the second user input may correspond to the short touch touching the camera 121 icon and the other one may correspond to a flicking, which flicks the pointer into a predetermined direction after touching the camera 121 icon.

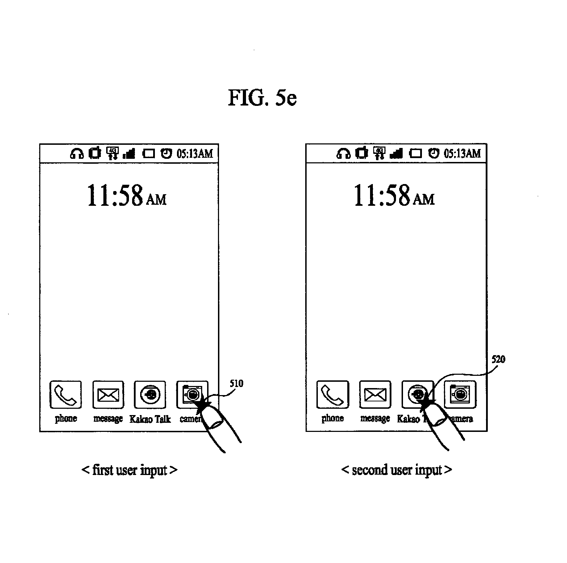

As depicted in an example FIG. 5e, one of the first user input and the second user input may correspond to a touch of a first icon 510 and the other one may correspond to a touch of a second icon 520.

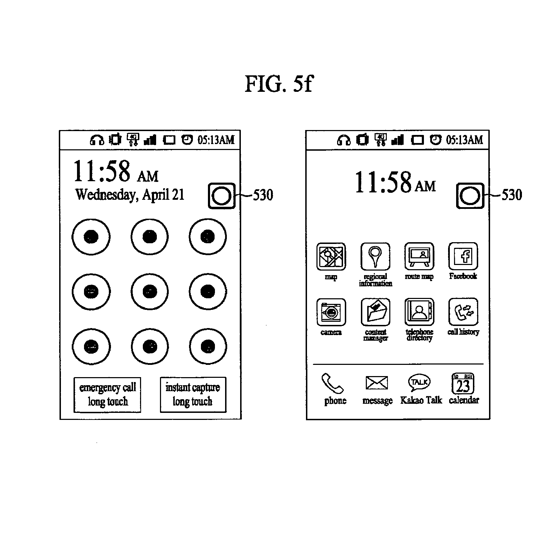

In order to increase accessibility of a user, an icon (or button) for inputting the first and the second user input may be displayed all the time in the display when the display 151 is turned on irrespective of an output change of the display 151. As an example, as depicted in FIG. 5f (a) and (b), the controller 180 can control the icon (or button) 530 for inputting the first and the second user input to be continuously displayed irrespective of the change of the output of the display 151. Of course, a location of the icon (or button) 530 for inputting the first and the second user input can be freely adjusted by a user. In this case, in order to prevent the icon (or button) 530 for inputting the first and the second user input from blocking an output of the display 151, the icon (or button) can be translucently displayed. The icon (or button), which is always displayed in the display irrespective of the output change of the display 151 to increase accessibility of a user, is called an assistive object in the following embodiment.

As depicted in the examples of FIG. 5a to FIG. 5f, various input methods can be configured by the first and the second user input. A configuration example of the first and the second user input may be non-limited to the examples depicted in FIG. 5a to FIG. 5f. Various input methods, which are not shown in the diagrams, can be configured by the first and the second user input. As an example, one of the first user input and the second user input may correspond to a touch of the camera icon and the other one may correspond to a touch of a physical key.

An operation of the mobile terminal 100 in case of receiving the first and the second user input is explained in detail with reference to following drawings.

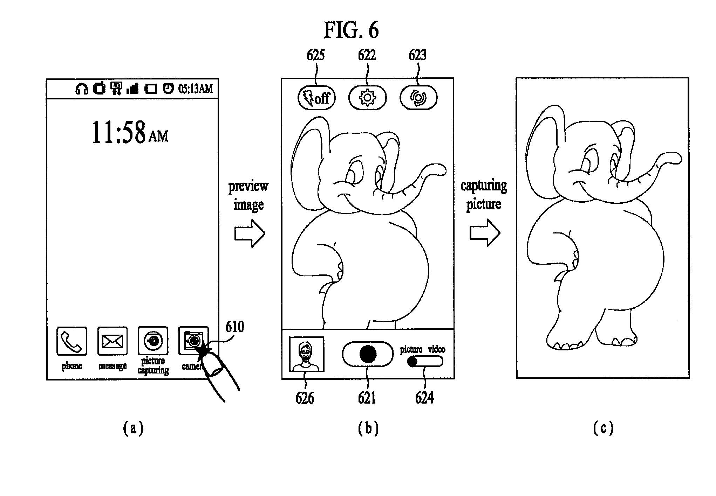

FIG. 6 is a diagram for explaining an operation of a mobile terminal when a first user input is received. For clarity, assume that a short touch of a camera icon 610 corresponds to the first user input.

As depicted in an example of FIG. 6 (a), if the camera icon 610 is shortly touched, the controller 180 turns on the camera 121 and can control a preview image, which is a processed image of an image inputted to the camera 121 in real-time, to be outputted via the display 151. In this case, the controller 180 can control menu items (e.g., a capture button 621, a setting button 622, a camera switching button 623, a toggle button 624, a flash button 625, a thumbnail button 626 and the like) configured to control an operation of the camera 121 to be displayed via the display 151.

First of all, the menu items depicted in FIG. 6 (b) are briefly explained. The capture button 621 can be used for a user to input a capturing command. If the capture button 621 is touched, the controller 180 can capture an image inputted to the camera 121 when the capture button 621 is touched. The capturing command can be triggered by the capture button or a voice of a user.

The setting button 622 is used for adjusting various settings of the camera. Specifically, a user can adjust a capturing mode of the camera, resolution of a picture to be captured, and the like via the setting button 622. In this case, the capturing mode of the camera is used for calling a suitable setting value of the camera in accordance with a type of a subject. When the capturing mode is adjusted, the controller 180 can control a preset setting value of the camera to be applied. In this case, the setting value of the camera may indicate an aperture value, an exposure value, a shutter speed, an ISO speed, and the like of the camera. In general, the capturing mode of the camera can be set to a portrait mode (a mode for capturing a person), a landscape mode (a mode for capturing a landscape), a close-up mode (a mode for capturing an object positioned in a short distance), a night mode (a mode for capturing in environment of less light), a fast mode (a mode for capturing a subject moving fast), and the like, by which the present invention may be non-limited.

The camera 121 switching mode 623 is used for determining which camera is going to be used when two or more cameras are included in the mobile terminal 100. The mobile terminal 100 according to the present invention can take a picture using one of a front camera 121 and a rear camera 121' only. Or, the mobile terminal 100 according to the present invention may take a picture using the front camera 121 and the rear camera 121' at the same time.

The toggle button 624 may be used for selecting a type of data to be taken among a picture and a video. In case of capturing a picture, a momentary image is captured when a capturing command is inputted. On the contrary, in case of capturing a video, images can be contiguously captured from a point on which a capturing command is inputted to a point on which the capturing is completed.

The flash button 625 is used for controlling On, Off, and automatic adjustment of a flash. In case of using the flash, a picture can be efficiently captured with a less amount of light.

The thumbnail button 626 may display a thumbnail of a recently captured picture. If the thumbnail button 626 is touched, a list of pictures and videos captured by a user can be displayed by entering a gallery.

As depicted in FIG. 6 (c), if a capturing command is inputted and a picture is captured, the controller 180 can control the captured picture to be displayed to enable a user to check the captured picture. In this case, the captured picture may be displayed for a predetermined time only and a preview image may be displayed again after the predetermined time elapses.

Subsequently, an operation of the mobile terminal 100 is explained in detail when a second user input is received.

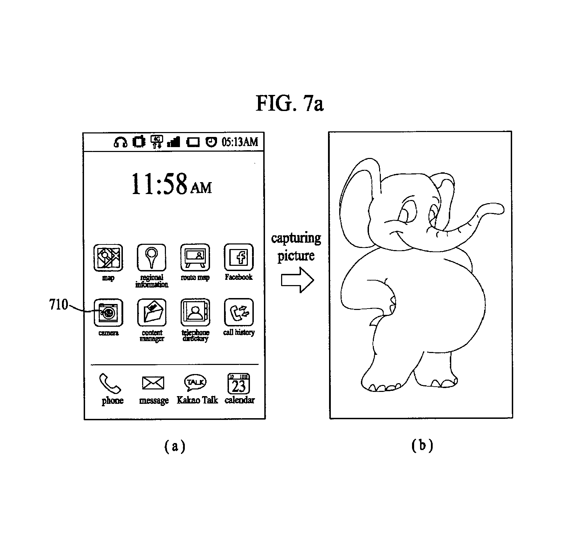

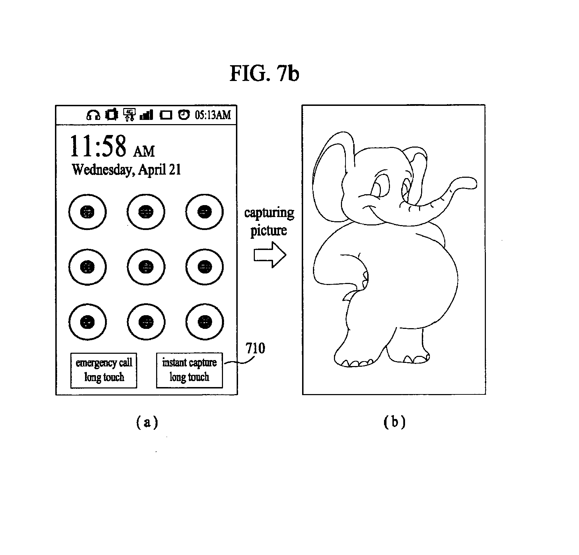

FIG. 7a and FIG. 7b are diagrams for explaining an operation of a mobile terminal when a second user input is received. For clarity, assume that a long touch of a camera 121 icon 710 corresponds to the second user input.

As depicted in an example of FIG. 7a, if the camera 121 icon 710 is long touched, the controller 180 turns on the camera 121 and can control a picture to be immediately taken without displaying a preview image of the camera. When a picture is captured, the controller 180 can control the picture to be displayed to enable a user to check the captured picture.

As depicted in an example of FIG. 7b (a), although the mobile terminal 100 is in a state of being locked, if the second user input is received, the controller 180 can control a picture to be captured without displaying a preview image. By doing so, the user can simply and promptly take a picture without unlocking the mobile terminal 100.

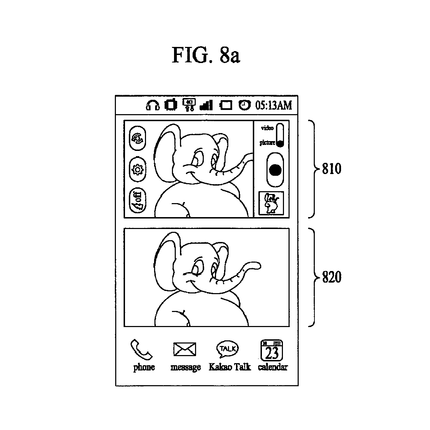

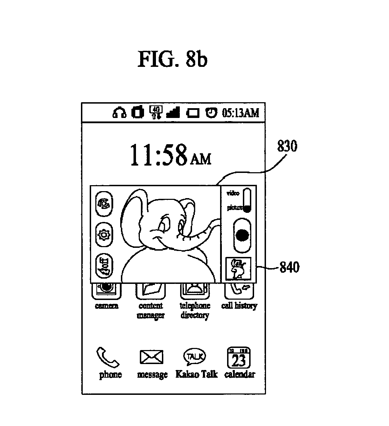

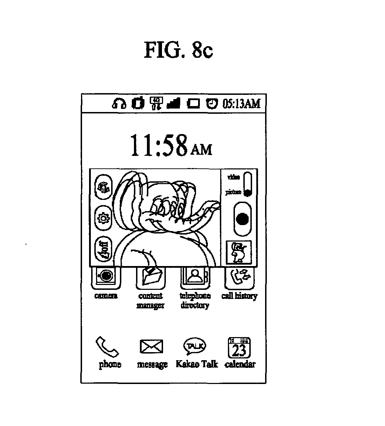

As depicted in FIG. 7a and FIG. 7b, in case of capturing a picture while a process of displaying a preview image is omitted, a user can capture a picture within a very short time. Yet, it is difficult to precisely determine whether a preferred subject is captured in a preferred composition when the subject is captured. Hence, the controller 180 can control the preview image of the camera to be further displayed together with the captured picture when the capturing is completed. Regarding this, it shall be described with reference to FIG. 8 in the following.

FIG. 8a to FIG. 8c are diagrams for simultaneously displaying a captured picture and a preview image when a picture is captured by a second user input. For clarity, assume that a long touch of a camera 121 icon corresponds to the second user input.

If the camera 121 icon is long touched, the controller 180 can control a picture to be immediately captured without displaying a preview image of the camera. As depicted in examples of FIG. 8a to FIG. 8c, if the captured picture is not focused to a subject preferred by a user or does not include the subject preferred by the user, the controller 180 can control the preview image to be displayed to enable the user to capture a picture again.

As an example, as depicted in an example of FIG. 8a, the controller 180 divides the display 151 into 2 areas and controls the preview image to be displayed in one area 810 and controls the captured picture to be displayed in the other area 820.

As depicted in FIG. 8b, the controller 180 can control a thumbnail 840 of the captured picture to be displayed while a preview image 830 is displayed. In FIG. 8b, the thumbnail of the captured picture is displayed via the thumbnail button 840.

As a different example, as depicted in FIG. 8c, the controller 180 can control the captured picture to be displayed in a manner of overlaying the preview image (in FIG. 8c, the preview image is represented by a line and the captured picture, which is displayed in a manner of overlaying the preview image, is represented by a dotted line). In this case, the controller can enable a user to see the captured picture and the preview image at the same time in a manner of configuring the captured image to be translucent. The user overlaps the preview image and the captured picture and may be then able to easily identify how a composition of a current preview image is matched with a composition of the captured picture.

When a picture is captured by a second user input, since a process of displaying the preview image is omitted, a user cannot have a chance to check an object to be captured. Hence, the user cannot manually focus on a preferred subject. As a result, the subject preferred by the user may be defocused. In this case, the controller 180 can automatically adjust a focus in accordance with a situation or based on a voice indication of the user in case of capturing a picture by the second user input.

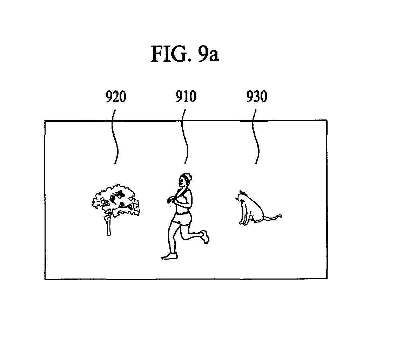

FIG. 9a to FIG. 9e are diagrams for explaining an example of automatically adjusting a focus when a picture is captured by a second user input. For clarity, a subject in which a focus is adjusted is represented with a thick line.

In case of capturing a picture by the second user input, the controller 180 can control a focus to be adjusted to a subject positioned in the middle. Specifically, as depicted in an example of FIG. 9a, the controller 180 can take a picture in a manner of focusing on a subject 910 positioned in the middle of a plurality of subjects 910/920/930. When a picture is captured, a user generally takes a picture in a manner of putting a subject in the middle of the picture. Hence, if a focus is adjusted to the subject positioned in the middle, the user may obtain a picture where the focus is adjusted to the preferred subject except a special case.

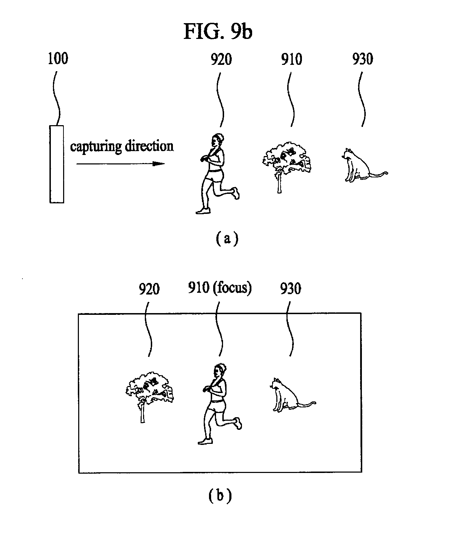

As a different example, the controller 180 can control a focus to be adjusted to a subject positioned in the nearest from the camera 121. For clarity, assume that a proximity extent of subjects located in a capturing direction is a person 910 > a tree 920 > a cat 930 in sequence. In case of capturing a picture by the second user input, as depicted in FIG. 9b(b), the controller 180 can take a picture in a manner of focusing on a subject positioned in the nearest from the camera 121. Since the person 910 corresponds to the nearest subject from the camera 121 in FIG. 9b(b), the controller 180 can take a picture in a manner of focusing on the person 910 as depicted in FIG. 9b(b).

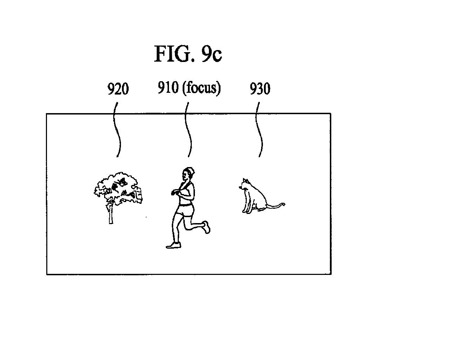

As a different example, the controller 180 can control a focus to be automatically adjusted to a person in case of capturing a picture by the second user input. FIG. 9c is a diagram for an example of a picture where the focus is adjusted to a person. As depicted in the example of FIG. 9c, it is able to control a picture to be captured in a manner that a focus is automatically adjusted to a person among a plurality of subjects 910/920/930. If a plurality of persons are included in an image inputted to the camera 121, the controller 180 may focus on the person positioned in the middle or may focus on the person nearest from the camera 121 as depicted in the examples of FIG. 9a and FIG. 9b, respectively.

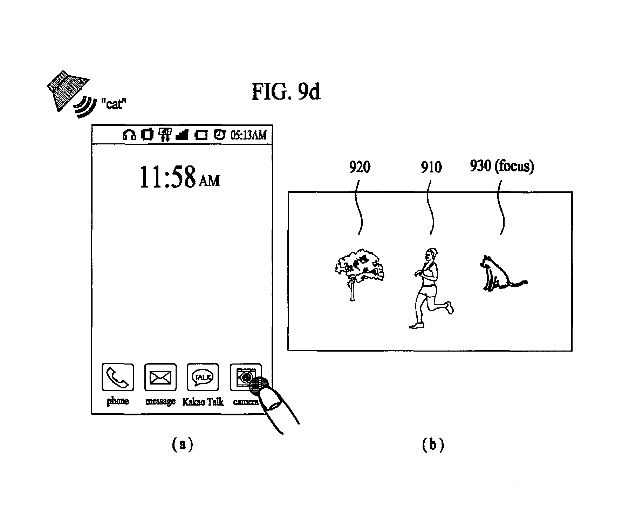

The controller 180 may focus on an object indicated by a voice command of a user. As an example, if a second user input corresponds to an input of a voice command while the camera 121 button is touched, the controller 180 can control a picture to be captured in a manner of focusing on the object indicated by the voice command. As an example, as depicted in FIG. 9d (a), if a user inputs such a voice as'cat' while touching the camera 121 button, the controller 180 can control a picture to be captured in a manner of focusing on a cat as depicted in FIG. 9d(b).

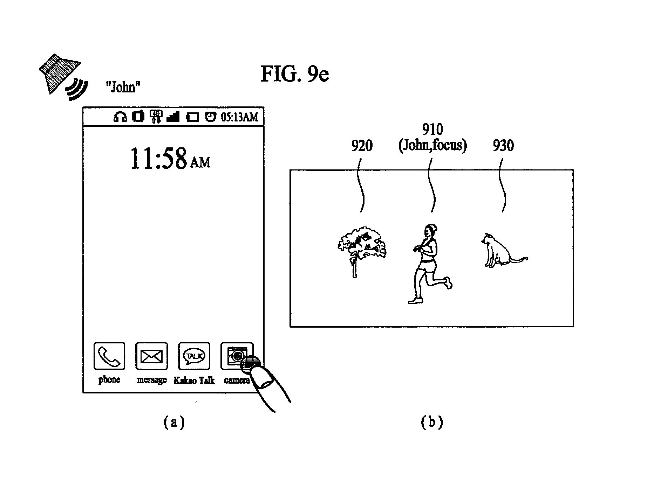

If the user says a name of a person, the controller 180 can take a picture in a manner of focusing on the person designated by the user. As an example, as depicted in an example of FIG. 9e(a), if the user inputs a such a voice as 'John' while touching the camera 121 button, the controller 180 searches for John in an image inputted to the camera 121 and can control a picture to be captured in a manner of focusing on the John as depicted in an example of FIG. 9e(b). The controller 180 may recognize the person indicated by the voice of the user in the image which is inputted to the camera 121 using a picture of a user registered in a telephone directory, a pre-captured picture including information on the captured person, and the like.

When a picture is captured by a first user input, various setting of the camera can be changed via the menu items provided with the preview image. Yet, when a picture is captured by a second user input, a chance for manipulating the menu items is not provided. Hence, a user may have a problem in that the picture is captured without changing the setting of the camera. Accordingly, the controller 180 can control the setting of the camera to be appropriately adjusted according to a situation when the picture is captured by the second user input. Regarding this, it shall be described in detail with reference to following drawings.

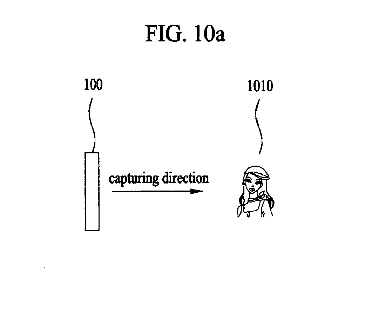

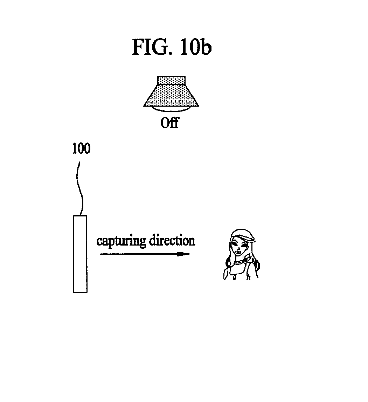

FIG. 10a and FIG. 10b are diagrams for explaining an example of automatically adjusting a camera setting when a picture is captured by a second user input.

As depicted in FIG. 10a, when a person 1010 is captured by the second user input, the controller 180 can control the camera setting to be adjusted to make the camera setting to be appropriate for capturing a person. In particular, the controller 180 can control the camera setting to be modified in accordance with a capturing mode (i.e., portrait mode) suitable for capturing a person.

As depicted in an example of FIG. 10b, in case of capturing a picture in a dark place, the controller 180 can control the camera setting to be adjusted to make the camera setting to be appropriate for capturing in the dark place (e.g., it may open the aperture or increase sensitivity of the camera to the max). In particular, the controller 180 can control the camera setting to be modified in accordance with a capturing mode (i.e., night mode) suitable for capturing a picture in a dark environment. The controller 180 may determine whether the mobile terminal 100 is positioned at the dark place based on a signal detected by the sensing unit 140 (specifically, an illumination sensor).

Although it is not depicted, in case of capturing a picture in an environment where the mobile terminal 100 moves fast, the controller 180 can control the camera setting to be adjusted to make the camera setting to be appropriate for capturing a subject that moves fast (e.g., a shutter speed is reduced to the minimum). In particular, the controller 180 can control the camera setting to be modified in accordance with a capturing mode (i.e., fast mode) suitable for capturing the subject that moves fast. The controller 180 may determine whether the mobile terminal 100 is moving fast based on a speed and the like measured using a signal detected by the sensing unit 140 (specifically, an acceleration sensor), GPS, and the like.

As mentioned in the foregoing description, the controller 180 can select a capturing mode appropriate for a subject to be captured or a capturing environment. In order to inform a user of a capturing mode of a picture, the controller 180 can control feedbacks different from each other to be outputted according to the capturing mode which is selected when the picture is captured. For instance, if a picture is captured in the portrait mode, the controller controls such a voice as 'person' to be outputted as a feedback. If a picture is captured in the fast mode, the controller controls such a voice as 'fast' to be outputted as a feedback. The controller 180 can control sound signals different from each other to be outputted in accordance with a capturing mode. Besides, the controller 180 may output a feedback in a form of vibration, LED flickering, or the like.

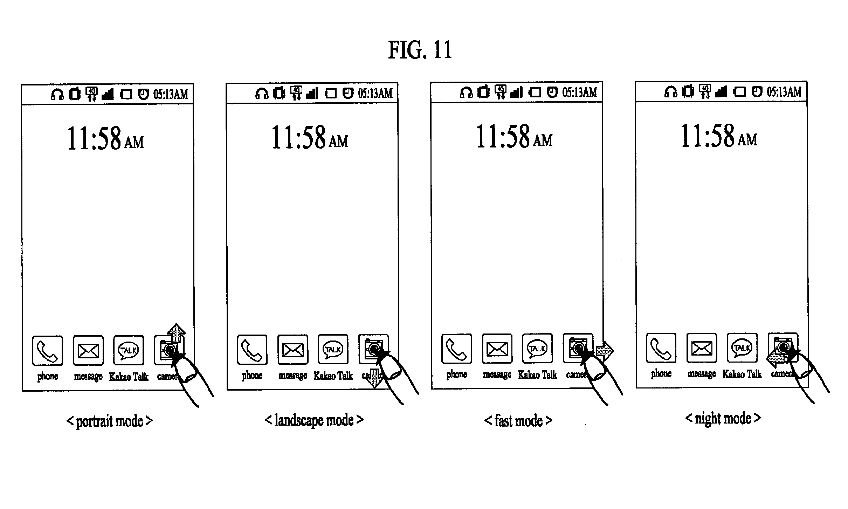

FIG. 10a and FIG. 10b have shown examples that the capturing mode of the camera is automatically selected according to the environment at which the mobile terminal 100 is positioned. Unlike the examples, the capturing mode of the camera can be manually adjusted by a user. Specifically, the controller 180 can control a picture to be captured in accordance with a capturing mode indicated by a second user input. Regarding this, it shall be described in detail with reference to FIG. 11.

FIG. 11 is a diagram for explaining an example of capturing a picture in a capturing mode indicated by a second user input. For clarity, assume that the second user input corresponds to a flicking of a pointer to a predetermined direction after touching a camera 121 icon.

The controller 180 touches the camera 121 icon and may be then able to determine a capturing mode of the camera based on a flicking direction of the pointer. As an example, as depicted in an example of FIG. 11, if the pointer touching the camera 121 icon moves to an upper direction, it may correspond to a capturing mode for capturing a picture in the portrait mode and if the pointer moves to a bottom direction, it may correspond to a capturing mode for capturing a picture in the landscape mode. Moreover, if the pointer moves to a left direction, it may correspond to a capturing mode for capturing a picture in the fast mode and if the pointer moves to a right direction, it may correspond to a capturing mode for capturing a picture in the night mode.

In particular, as depicted in the example of FIG. 11, the controller 180 may take a picture by selecting a capturing mode (i.e., capturing mode corresponding to a moving direction of the pointer touching the camera 121 icon) which is manually designated by the second user input.

As depicted in the examples of FIG. 10a, FIG. 10b and FIG. 11, it may take a picture coinciding with what a user prefers as much as possible in a manner of appropriately selecting a capturing mode of the camera before the picture is captured. As depicted in the examples of FIG. 10a, FIG. 10b and FIG. 11, instead of selecting a capturing mode of the camera before a picture is captured (or in addition to selecting the capturing mode of the camera before a picture is captured), the controller 180 can control a picture to be revised after the picture is captured. Although it is not depicted, the controller 180 can be configured to revise brightness, a hue, and a tone (e.g., sepia tone, grey tone, etc.) of the captured picture after capturing the picture.

If a preview image is displayed by inputting a first user input, a user can take a picture via menu items provided together with the preview image in a manner of selecting at least one of a front camera 121 and a rear camera 121'. Yet, when a picture is captured by a second user input, it is not clear which one is used for capturing the picture among the front camera 121 and the rear camera 121' since a chance for manipulating the menu items is not provided. Accordingly, the controller 180 captures a picture selectively using one of the front camera 121 and the rear camera 121' according to a default setting value. Or, the controller 180 may take a picture using the front camera 121 and the rear camera 121' at the same time. In case of capturing a picture using the front camera 121 and the rear camera 121' at the same time, the controller 180 may generate two picture files (a picture captured by the front camera 121 and a picture captured by the rear camera 121') or may generate one picture file (merging the picture captured by the front camera 121 and the picture captured by the rear camera 121' with each other)

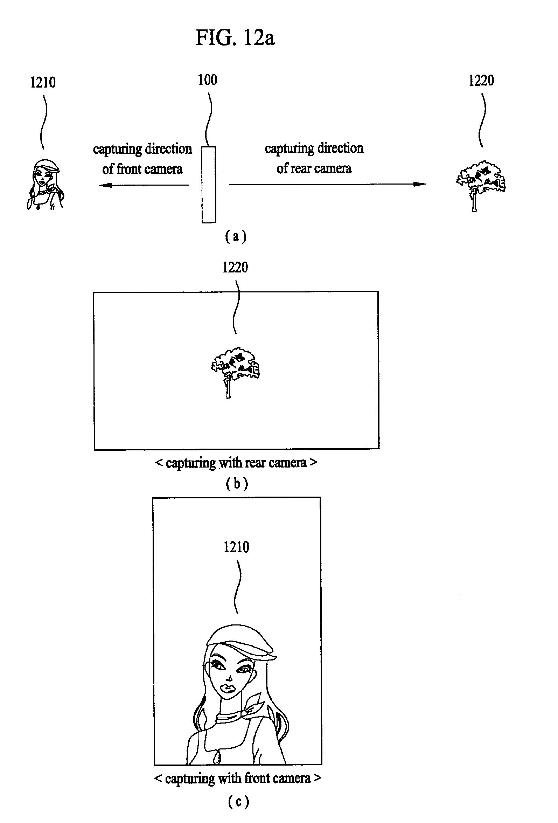

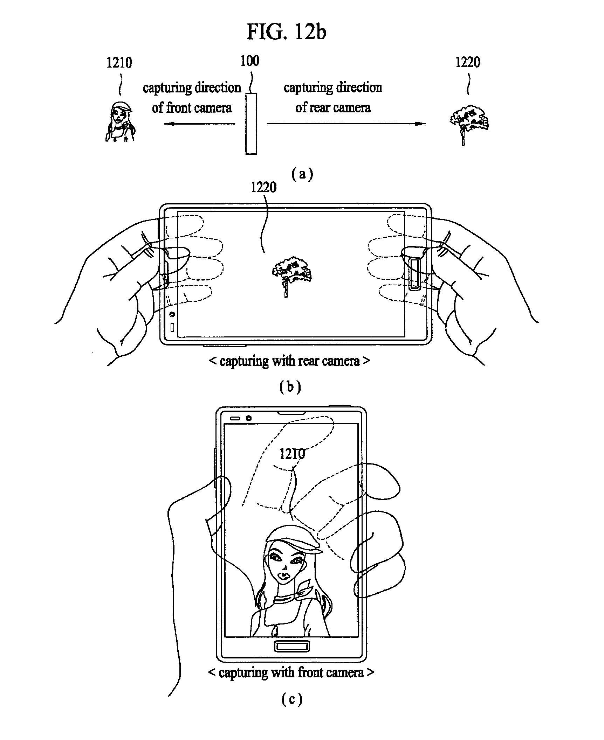

The mobile terminal 100 according to the present invention can take a picture in a manner of appropriately using at least one of the front camera 121 and the rear camera 121' in accordance with a situation when the picture is captured by a second user input. Regarding this, it shall be described in detail with reference to FIG. 12 in the following.

FIG. 12a and FIG. 12b are diagrams for explaining an example of capturing a picture by selecting at least one of a front camera and a rear camera according to environment of capturing the picture in accordance with a second user input. For clarity, as depicted in examples of FIG. 12a(a) and FIG. 12b(b), assume that an object to be captured by the front camera 121 corresponds to a person (i.e., a photographer) 1210 and an object to be captured by the rear camera 121' corresponds to a tree 1220.

The controller 180 can select at least one of the front camera 121 and the rear camera 121' based on whether the mobile terminal 100 is tilted. As an example, as depicted in an example of FIG. 12a (b), if a second user input is inputted when the mobile terminal 100 is tilted in a horizontal orientation, the controller 180 can control a picture to be captured by the rear camera 121' (or the front camera 121). On the contrary, as depicted in an example of FIG. 12a(c), if the second user input is inputted when the mobile terminal 100 is tilted in a vertical orientation, the controller 180 can control a picture to be captured by the front camera 121 (or the rear camera 121'). In particular, as depicted in the examples of FIG. 12a, the controller 180 can capture a picture by selecting one of the front camera 121 and the rear camera 121' according to whether the mobile terminal 100 is put in the horizontal orientation or the vertical orientation. In this case, whether the mobile terminal is put in the horizontal orientation or the vertical orientation can be determined by a signal detected by the sensing unit 140 (e.g., an acceleration sensor, a gyro sensor, and the like).

The controller 180 may select at least one of the front camera 121 and the rear camera 121' based on a state that the mobile terminal 100 is gripped. As an example, as depicted in an example of FIG. 12b (b), if a second user input is inputted when a user grips the mobile terminal 100 using both hands, the controller 180 can control a picture to be captured by the rear camera 121' (or the front camera 121). On the contrary, as depicted in an example of FIG. 12b(c), if the second user input is inputted when the user grips the mobile terminal 100 with a hand, the controller 180 can control a picture to be captured by the front camera 121 (or the rear camera 121'). In this case, whether the mobile terminal 100 is gripped with both hands or a hand can be determined by a signal detected by the sensing unit 140 (e.g., a grip sensor).

As depicted in the examples of FIG. 12a and FIG. 12b, the controller 180 can control a picture to be captured using one of the front camera 121 and the rear camera 121' in accordance with an operation state of the mobile terminal 100.

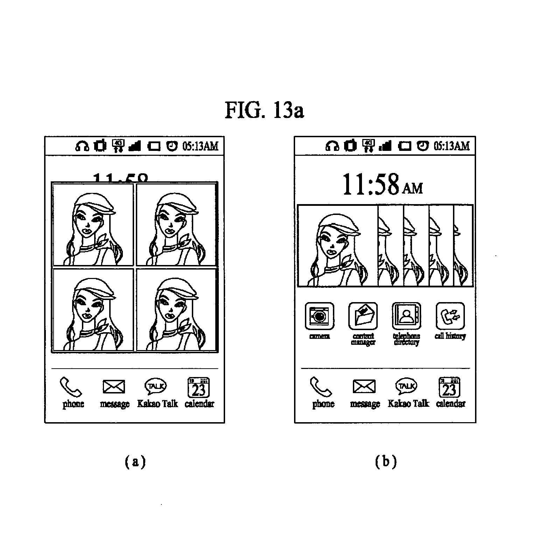

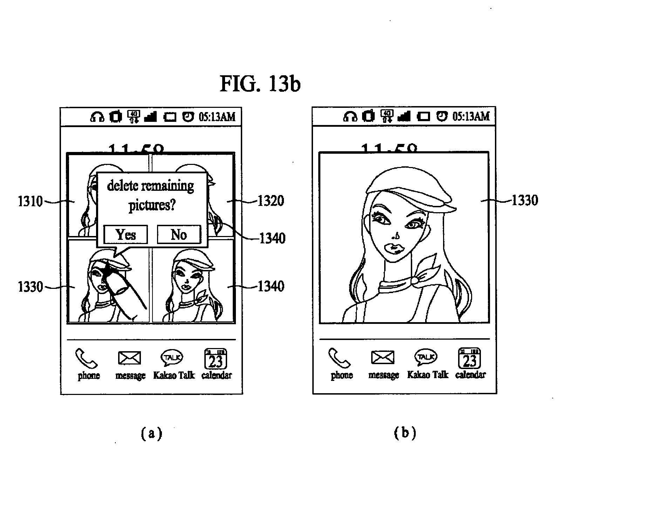

A user may take a picture while watching a preview image after a first user input is inputted. Or, the user may take a picture without outputting the preview image due to a second user input. Capturing a picture by the second user input may be helpful in quickly taking a picture compared to capturing a picture by the first user input since a step of outputting the preview image is omitted. In particular, the user may operate the mobile terminal 100 to perform a prompt picture capturing by the second user input in case of capturing a fast moving subject or in an urgent situation. As mentioned in the foregoing description, the controller 180 can capture a plurality of pictures in case of capturing a picture by the second user input in a manner of considering that a picture capturing will be initiated by the second user input in the situation as urgent as omitting the preview image. The controller 180 can capture a plurality of the pictures as many as a predetermined number or may take a plurality of the pictures in a manner of continuously capturing pictures until a contact of a pointer is released from a prescribed icon. An output of the mobile terminal 100 in case of capturing a plurality of the pictures is described in detail with reference to FIG. 13.

FIG. 13a and FIG. 13b is a diagram for an example of an output of a mobile terminal 100 when a plurality of pictures are captured by a second user input. If a plurality of the pictures are captured, the controller 180 can arrange a plurality of the pictures in a tile form as depicted in FIG. 13a(a) or may arrange a plurality of the pictures in a stair form (i.e., a form that an image positioned at the front side blocks a part of an image positioned at the back side) as depicted in FIG. 13a(b). As depicted in an example of FIG. 13a(a), if a plurality of the pictures are arranged in the tile form, a user selects a picture from a plurality of the pictures to see the selected picture large. As depicted in an example of FIG. 13a(b), if a plurality of the pictures are arranged in the stair form, the user drags a pointer to select and see one of a plurality of the pictures.

If at least one of a plurality of the pictures is selected, the controller 180 can control remaining pictures except the selected picture to be automatically deleted. In particular, as depicted in an example of FIG. 13b(a), if the user selects at least one picture corresponding to an intention of the user from a plurality of the pictures, the controller 180 can control all of the remaining pictures except the selected picture to be deleted to delete unnecessary pictures from the memory 160. As depicted in the example of FIG. 13b(a), the controller 180 may display a menu window 1340 capable of determining whether to delete the remaining pictures before deleting the remaining pictures. If a user input inputted to the menu window 1340 indicates to delete the remaining pictures, the controller 180 can control the remaining pictures to be deleted except the picture selected by the user as depicted in an example of FIG. 13b (b).

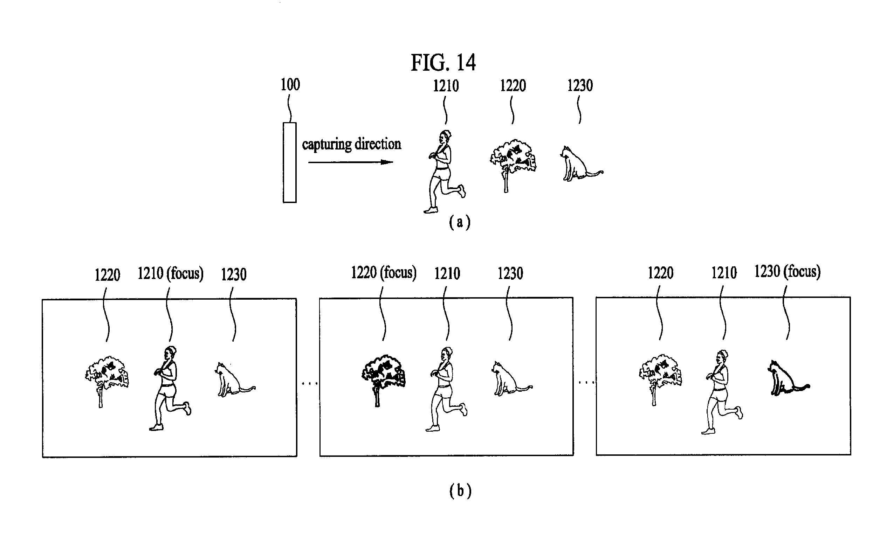

The controller 180 can capture a plurality of pictures in a manner of varying a focal length. Regarding this, it shall be described in detail with reference to FIG. 14.

FIG. 14 is a diagram for explaining an example of capturing a plurality of pictures in a manner of varying a focal length. For clarity, assume that a subject in which a focus is adjusted is represented with a thick line and a distance between each of the subjects 1410/1420/1430 which are put in a capturing direction and the camera are different from each other.

In case of capturing a plurality of pictures in response to a second user input, as depicted in an example of FIG. 14 (b), the controller 180 can control pictures in which a focus is adjusted from a subject positioned in a short distance to a subject positioned at a long distance to be secured in a manner of capturing a plurality of the pictures including various focal lengths of the camera. As depicted in the example of FIG. 14 (b), if a plurality of the pictures including various focal lengths are captured, a user may easily obtain a picture of a subject in which a focus is adjusted, which corresponds to the subject that the user wants to capture.

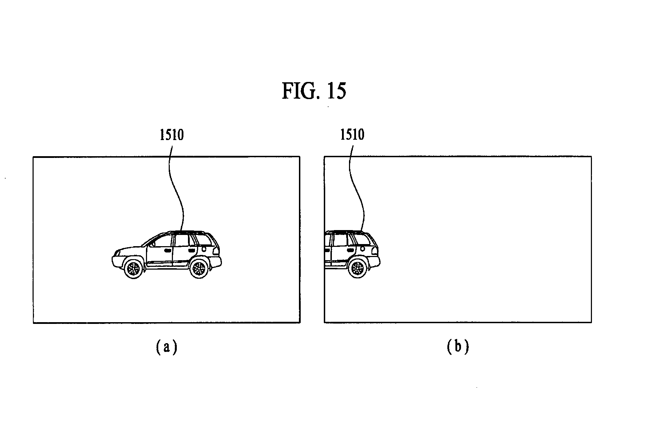

If the second user input is inputted, a picture is captured without displaying a preview image. Hence, the user cannot precisely expect the picture to be captured. Accordingly, if distortion for an output (i.e., a captured picture) of capturing a picture, which is captured by the second used input, is gross, the controller 180 can control a feedback configured to inform a user of the distortion of the captured picture to be outputted. Regarding this, it shall be descried in detail with reference to FIG. 15 in the following.

FIG. 15 is a diagram for explaining an example that a captured picture is distorted. If the camera 121 is activated by inputting the second user input, an image falls on an image sensing device of the camera and a picture is captured in a manner of processing the image into a digital image. As depicted in an example of FIG. 15 (a), if a picture is captured by the second user input, the controller 180 configures a focus area in the image falling on the image sensing device and may be then able to capture a picture (FIG. 15 (a) shows an example that a focus is adjusted to a car 1510). Yet, as depicted in an example of FIG. 15 (b), if a subject is not properly captured since the subject relatively moves too fast, the controller 180 can determine as a captured picture is distorted (FIG. 15 (b) shows an example that a part of the car 1510 has deviated from a frame). In particular, if a subject is not properly captured since the subject moves fast for a moment between a timing point on which the focus area is configured and a timing point on which an actual capturing is initiated, the controller 180 can determined that the captured picture is distorted.

Although it is not depicted, if sharpness of the captured picture is less than a predetermined value due to a movement of the mobile terminal 100 or a movement of a subject, if brightness of the captured picture is less than a predetermined value since surrounding is too dark, or the like, the controller 180 can determine the captured picture is distorted.

If the captured picture is determined as distorted, the controller 180 can output a feedback configured to inform a user of the distortion of the captured picture. The feedback can be outputted in a form of sound data, vibration, LED flickering, or the like.

As a different example, if the captured picture is determined as distorted, the controller 180 may automatically take a picture one more time. In this case, the controller 180 may automatically adjust the camera 121 setting according to a reason for the distortion of the captured picture. For instance, if the sharpness of the captured picture is low, the controller can capture a picture again by reducing a shutter speed. If the brightness of the captured picture is low, the controller can capture a picture again by increasing the extent of opening the aperture or the sensitivity of the camera.

As mentioned in the foregoing description, the mobile terminal 100 according to the present invention may capture a picture after a preview image is displayed or may quickly capture a picture without displaying the preview image. In the following, various embodiments capable of being expanded by the mobile terminal 100 according to the present invention are described.

### <In-App capturing>

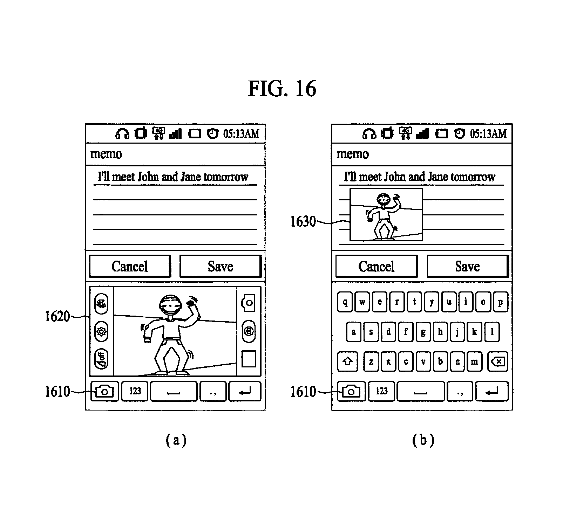

The mobile terminal 100 according to the present invention can output a preview image while an application except a camera 121 application is executing or without displaying the preview image. Regarding this, it shall be described in detail with reference to FIG. 16.

FIG. 16 is a diagram for explaining an operation of a mobile terminal when a first user input or a second user input is inputted in the middle of executing an application. For clarity, assume that the mobile terminal 100 is executing a memo application.

In the middle of executing an application, a user can display a preview image by inputting a first user input or a second user input or the user can take a picture without displaying the preview image. In this case, as depicted in an example of FIG. 16 (a) and (b), a camera 121 icon (or button) 1610 for inputting the first user input or the second user input can be provided via a virtual keypad.

As depicted in an example of FIG. 16 (a), if the first user input (e.g., a short touch on the camera 121 icon 1610 of the virtual keypad) is inputted form the user, the controller 180 can control a preview image 1620 of the camera to be displayed on an execution screen of an application in a manner of overlaying the execution screen. A display position of the preview image 1620, which is displayed in a manner of overlaying the execution screen, and a size of the preview image can be manually adjusted by the user.

Unlike the aforementioned description, if a second input is inputted (e.g., a long touch on the camera 121 icon 1610 of the virtual keypad), the controller 180 immediately captures a picture without displaying the preview image and may control a captured picture 1630 to be automatically inserted into a document in editing as depicted in an example of FIG. 16 (b). As depicted in the example of FIG. 16 (b), it is apparent that the captured picture 1630 can be automatically inserted to the document in an editing process in case that a picture is captured via the preview image.

If a picture is captured (for instance, the picture is captured via the preview image or the picture is directly captured by the second user input without displaying the preview image) while the mobile terminal 100 is executing a messenger application (e.g., Kakao Talk, WhatsApp, etc.), the controller 180 can control the captured picture to be immediately transmitted to a conversation counterpart. If a picture is captured while the mobile terminal 100 is executing a message application or an e-mail application, the controller 180 can control the captured picture to be attached to a message or an e-mail in the course of writing the message or the e-mail.

As mentioned in the foregoing description, if a picture is captured while an application is executing, the controller 180 can control the captured picture to be applied to the currently executing application.

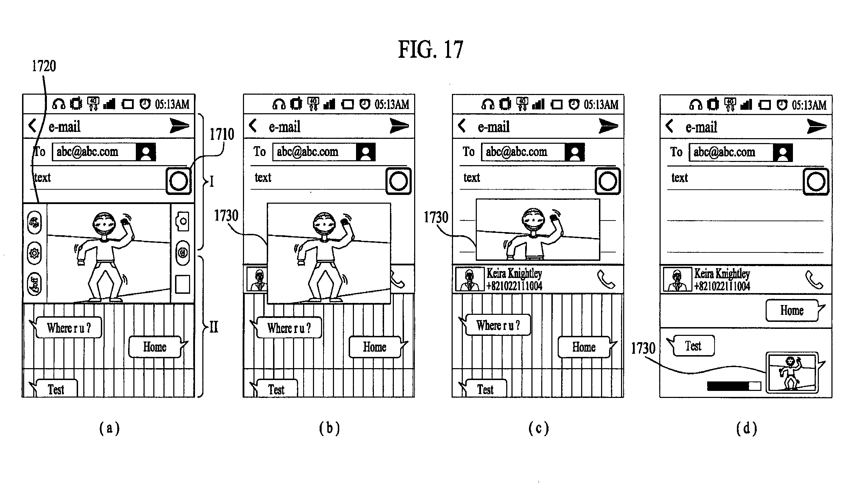

If the mobile terminal 100 is executing a plurality of applications at the same time, the controller 180 may control the captured picture to be applied to a single application only among a plurality of the applications. Regarding this, it shall be described in detail with reference to FIG. 17 in the following.

FIG. 17 is a diagram for explaining an operation of a mobile terminal 100 when a picture is captured in the middle of executing a plurality of applications at the same time. For clarity, assume that the display 151 is divided into two areas (I and II) and applications different from each other are displayed via the divided two areas, respectively. Specifically, assume that a first application (FIG. 17 shows an example of an e-mail application) is executed in a first area I and a second application (FIG. 17 shows an example of a messenger application) is executed in a second area II.

As depicted in an example of FIG. 17 (a), if a first user input (e.g., a short touch on an assistive object 1710) is inputted while the first application and the second application are executed at the same time, the controller 180 can control a preview image 1720 of the camera to be displayed on an execution screen of the first application and an execution screen of the second application in a manner of overlaying the execution screens.

Unlike the aforementioned description, if a second user input is inputted, the control unit 180 may capture a picture without displaying a preview image. As depicted in an example of FIG. 17 (b), the controller 180 can control a picture 1730 captured from the preview image or the second user input to be displayed on the execution screen of the first application and the execution screen of the second application in a manner of overlaying the execution screens. In this case, if the captured picture is dragged, the controller 180 can control the captured picture to be applied to an application corresponding to a point into which the dragged picture is dropped.

As an example, as depicted in an example of FIG. 17 (c), if the captured picture is dragged and dropped into the first area I, the controller 180 can control the captured picture to be applied to the first application (FIG. 17 (c) shows an example that the picture 1730 is attached to the text of the e-mail). Unlike to the aforementioned description, if the captured picture is dragged and dropped into the second area II, as depicted in an example of FIG. 17 (d), the controller 180 can control the captured picture to be applied to the second application (FIG. 17 (d) shows an example that the captured picture 1730 is transmitted to a conversation counterpart in a message form).

As mentioned in the foregoing description, if a picture is captured while an application is executing, the controller 180 can control the captured picture to be immediately applied to the currently executing application. By doing so, a user can easily apply the captured picture to the application without performing a separate loading process.

### <A position in which a captured picture is displayed>

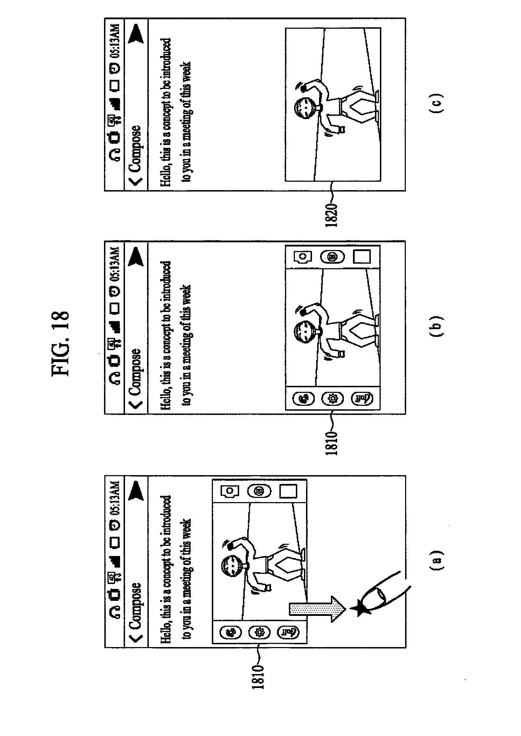

As mentioned earlier in FIG. 16, if a picture is captured by a first user input or a second user input in the middle of editing a document, the captured picture can be inserted into the document. If a picture is captured by the first user input in the middle of editing the document, the controller 180 can configure a position in which the captured picture is inserted to be identical to a position in which a preview image is inserted. Regarding this, it shall be described in detail with reference to FIG. 18.

FIG. 18 is a diagram for explaining an example of inserting a captured picture into a position in which a preview image is outputted. As depicted in an example of FIG. 18(a), if a first user input (e.g., a short touch on an assistive object) is inputted in the middle of editing a document, the controller 180 can control a preview image 1810 of the camera to be displayed on an editing screen of the document. In this case, as depicted in examples of FIG. 18 (a) and (b), a position of the preview image 1810 of the camera can be freely modified by a drag input of a user (FIG. 18 (a) and (b) show an example that the preview image 1810 has moved to the bottom from the middle of the screen by the drag input of the user). If a capturing command is inputted in the preview image 1810, the controller 180 can capture a picture. In this case, the controller 180 can determine a position in which the preview image 1810 is displayed when the capturing command is inputted as a position in which the captured picture is inserted. For instance, as depicted in the example of FIG. 18 (b), if the capturing command is inputted when the preview image 1810 is positioned at the bottom of the editing document, the controller 180 can control the captured picture 1820 to be inserted in the bottom of the editing document as depicted in an example of FIG. 18 (c).

As mentioned in the foregoing description, the position in which the captured picture is displayed may depend on the position in which the preview image is displayed. A user may preferentially determine a position in which a picture to be captured is inserted by adjusting the position of the preview image before the picture is captured.

### <Configuring a captured picture as a hyperlink object>

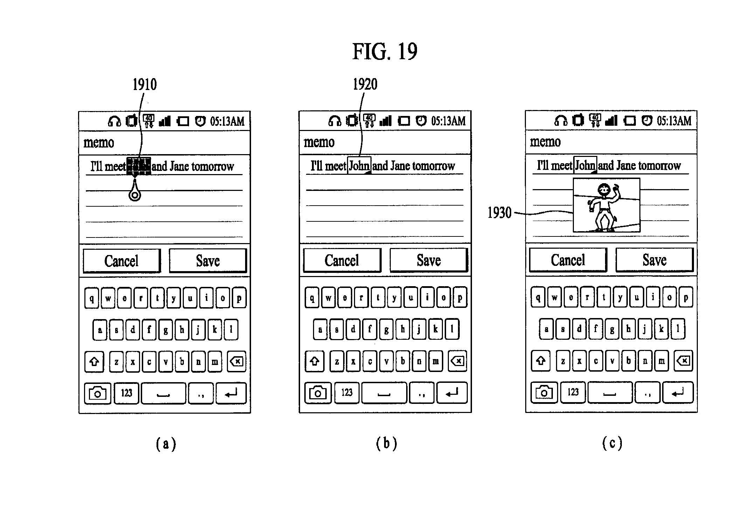

Having selected a prescribed data by a user, if a picture is captured by a first user input or a second user input, the controller 180 can control the captured picture to be configured as an object linked to the selected prescribed data. Regarding this, it shall be described in detail with reference to FIG. 19.

FIG. 19 is a diagram for an example of configuring a captured picture as a link object of data selected by a user. The user can select data with which a picture to be captured will be linked before the first or the second user input is inputted. Subsequently, if a picture is captured by the first user input or the second user input, the controller 180 can control the captured picture to be configured as an object which is linked to the data selected by the user.

As an example, as depicted in an example of FIG. 19 (a), if a picture is captured by the first user input or the second user input while such a word as 'John' is selected 1910, the controller 180 configures the captured picture as a hyperlink object of the word selected by the user and writes an identification marking 1920 on the word selected by the user to inform that a hyperlink is configured on the word selected by the user as depicted in an example of FIG. 19 (b). If data to which the hyperlink is set is selected (e.g., touch on 'John'), the controller 180 can control the picture 1930, which is hyperlinked with the selected data, to be displayed as depicted in an example of FIG. 19 (c).

As depicted in the examples of FIG. 19, the controller 180 can control the captured picture to be inserted into a document as a hyperlink object. By doing so, spatial waste possessed by the captured picture in case of inserting the captured picture into the document can be minimized and the captured picture can be loaded when a user needs the picture only.

### <Liaison between a captured picture and schedule>

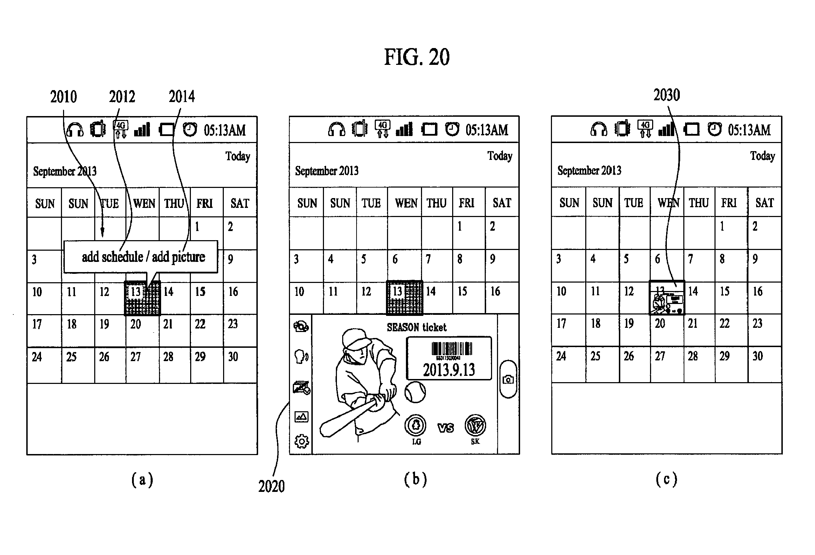

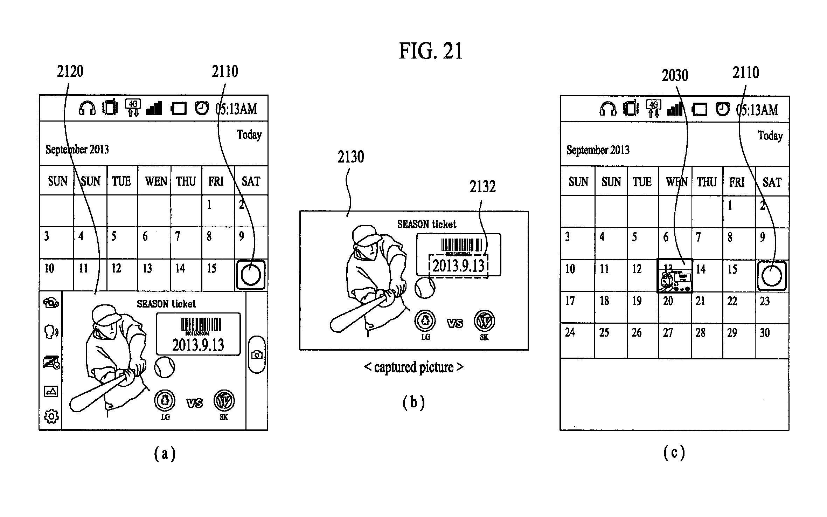

If a picture is captured via a preview image or a second user input while a scheduling application is executing, the controller 180 can control the captured picture to be directly inserted into a schedule. In this case, the controller 180 may automatically determine a date to which a schedule is added via a text recognition of the captured picture. Regarding this, it shall be described in detail with reference to FIG. 20 and FIG. 21.

FIG. 20 and FIG. 21 are diagrams for explaining an example of adding a captured picture to a schedule. FIG. 20 is a diagram for an example of adding a captured picture to a schedule designated by a user and FIG. 21 is a diagram for an example of automatically determining a date to which a schedule is added using a text message extracted from the captured picture.

If a user long touches a specific date on the calendar, as depicted in an example of FIG. 20 (a), the controller 180 can control a menu 2010 for selecting data, which is intended to be added to the selected date, to be displayed. A 'schedule add' item 2012 displayed in the menu 2010 is used for adding a schedule in a text form to the selected date. A 'picture add' item 2014 displayed in the menu 2010 is used for adding a schedule together with a picture to the selected date.

If a first user input (e.g., a short touch on the 'picture add' item 2014) is inputted on the menu item, the controller 180 can control a preview image 2020, which is used for capturing a picture to be added to the selected date, to be outputted as depicted in an example of FIG. 20 (b). On the contrary, if a second user input (e.g., a long touch on the 'picture add' item 2014) is inputted on the menu item, the controller 180 can control a picture to be immediately captured without outputting the preview image.

If a picture capturing command is inputted via the preview image 2020 or if a picture is captured by receiving a second user input, the controller 180 can control a captured picture 2030 to be added to the specific date selected by the user as depicted in an example of FIG. 20 (c).

FIG. 20 (a) to (c) show an example that the captured picture can be added to the selected specific date in case of capturing the picture after the user selects the specific date. On the contrary, the controller 180 captures a picture and may be then able to control the captured picture to be added to the specific date in a manner of waiting for a selection of the specific date selected by the user.

Subsequently, an example that a date to which a picture to be added is automatically determined based on a text extracted from the captured picture is explained in the following.

As depicted in an example of FIG. 21 (a), if a first user input is inputted (e.g., a short touch on an assistive object 2110) while a scheduling application is executing, the controller 180 can control a preview image 2120 for capturing a picture to be displayed. On the contrary, if a second user input is inputted (e.g., a long touch on the assistive object 2110), the controller 180 can control a picture to be immediately captured without displaying the preview image.

If a picture is captured via the preview image 2120 or the second user input, the controller 180 extracts a text from the captured picture 2130 and may be then able to determine whether the extracted text indicates a prescribed date. As an example, as depicted in an example of FIG. 21 (c), if a text 2132 indicating such a specific date as 2013. 9. 13. is included the captured picture 2130, the controller 180 can control the captured picture 2130 to be added to the date (i.e., Sep. 13^{th}. 2013) indicated by the extracted text as depicted in an example of FIG. 21 (d).

As depicted in FIG. 20, if the text indicating the specific date cannot be extracted from the captured picture, the controller 180 may add the captured picture to a date designated by a user.

### <Focusing on data selected by user>

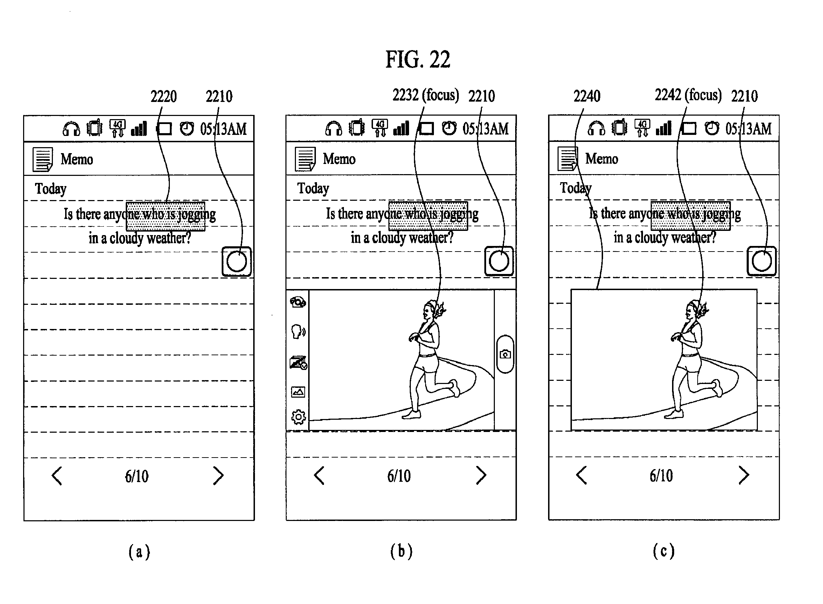

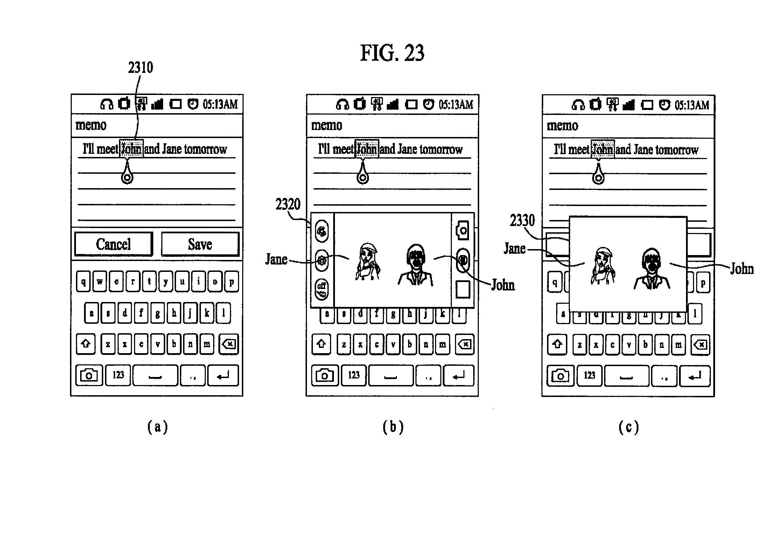

If a user inputs a first user input or a second user input after selecting a prescribed data, the controller 180 can display a preview image or take a picture in a manner of focusing on an object capable of being indicated by the prescribed data selected by the user. Regarding this, it shall be described in detail with reference to FIG. 22 and FIG. 23.

FIG. 22 and FIG. 23 are diagrams for an example of capturing a picture in a manner of focusing into an object indicated by data selected by a user. For clarity, an object in which a focus is adjusted is represented with a thick line.

A user can select data for indicating an object, which is intended to be focused, before inputting a first or a second user input. Subsequently, if a preview image or a picture is captured by the first user input or the second user input, the controller 180 can control a focus to be adjusted to the object indicated by the data which is selected by the user. As an example, if the first user input (e.g., a short touch on an assistive object 2210) is inputted while such a phrase as 'jogging person' 2220 is selected, as depicted in an example of FIG. 22 (b), the controller 180 outputs a preview image 2230 of the camera and may be then able to control a focus to be adjusted to an object (i.e., a jogging person 2232 displayed in the preview image 2230) indicated by the data 2220 which is selected by the user. If the second user input (e.g., a long touch on the assistive object 2210) is inputted while such the phrase as 'jogging person' 2220 is selected, the controller 180 can take a picture in a manner of focusing on the object (i.e., jogging person 2242) indicated by the selected data without displaying the preview image as depicted in an example of FIG. 22 (c). In this case, the controller 180 may extract the object indicated by the user from the text selected by the user in a manner of performing a natural language processing on the selected text.

If the data selected by the user corresponds to a name of a specific person, the controller 180 may display a preview image where a focus is adjusted to the person indicated by the selected data or may control a picture to be captured in a manner of focusing on the person indicated by the selected data. As an example, as depicted in an example of FIG. 23 (a), if the first input is inputted while such a name of a person 2310 as 'John' is selected, the controller 180 outputs a preview image 2320 of the camera and may be then able to control a focus to be adjusted to the person (i.e., John) indicated by the data 2310 which is selected by the user as depicted in an example of FIG. 23 (b). If the second user input is inputted while such a name of a person 2310 as 'John' is selected, the controller 180 may control a picture to be captured in a manner of focusing on a person (i.e., John) indicated by the selected data 2310 without displaying the preview image as depicted in an example of FIG. 23(c). The controller 180 may recognize the person, which is indicated by the data selected from the user, using a picture of a user registered in a telephone directory, a pre-captured picture including information on the captured person, and the like.

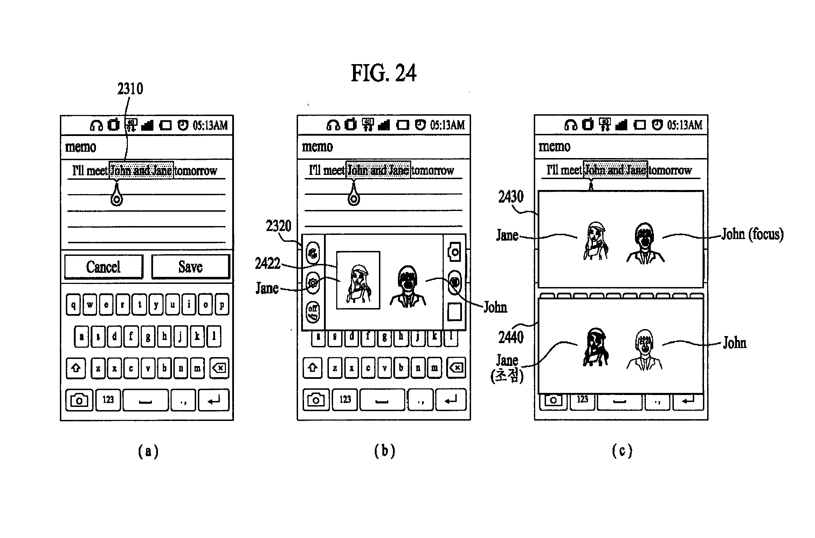

If the data selected by the user indicates a plurality of objects, the controller 180 may control a plurality of pictures to be captured in a manner of focusing on each of a plurality of the objects. Regarding this, it shall be described in detail with reference to FIG. 24 in the following.

FIG. 24 is a diagram for explaining an operation of a mobile terminal 100 in case that a plurality of objects are indicated by data selected by a user.

If a first user input or a second user input is inputted, the controller 180 can determine an object indicated by the data, which is selected by the user, in a manner of analyzing the data selected by the user. As an example, in FIG. 24 (a), 'John' and 'Jane' can be selected as the indicated objects from the data 'John and Jane' 2410 selected by the user.

If the first user input is inputted while the data selected by the user is indicating a plurality of objects, the controller 180 displays a preview image 2420 and may be then able to control a focus to be adjusted to a randomly selected object among a plurality of the objects as depicted in an example of FIG. 24 (b) (FIG. 24 (b) shows an example that the focus is adjusted to John). In this case, the controller 180 may control a feedback to be outputted to inform that the focus is not adjusted to a part of a plurality of the objects indicated by the data which is selected by the user. FIG. 24 (b) shows an example of the feedback such as an indicator 2422 configured to identify an object (i.e., Jane) where the focus is not adjusted.

If the second user input is inputted while the data selected by the user is indicating a plurality of objects, the controller 180 may control a plurality of pictures to be captured in a manner of focusing on each of a plurality of the indicated objects without displaying the preview image. As an example, as depicted in an example of FIG. 24 (c), the controller 180 can capture a picture 2430 where a focus is adjusted to 'John' indicated by the data which is selected by the user and a picture 2440 where a focus is adjusted to 'Jane'.

In the course of editing a document, a user can select an object on which a focus will be adjusted in a manner of inputting a text and selecting the inputted text by the user. If a picture where a focus is adjusted to the data selected by the user is captured in the middle of editing the text, as mentioned earlier in FIG. 16, the controller 180 can control the captured picture to be attached to the document while the document is edited. As mentioned earlier in the example of FIG. 19, it is apparent that the captured picture can be inserted to the document as a hyperlink object of the data selected by the user.

As mentioned in the foregoing description with reference to the examples of FIG. 22 to FIG. 24, the controller 180 can display the preview image in a manner of focusing on the data selected by the user or may capture a picture in a manner of focusing on the data selected by the user. Although FIG. 22 to FIG. 24 show an example that data capable of being selected by a user corresponds to a text, the data capable of being selected by the user may be selected from a contact list, a friend list of messenger, an image, and a video.

### <Size adjustment of a captured picture>

When a captured picture is applied to an application, the controller 180 can adjust a size of the captured picture to make the size of the captured picture appropriate for an attribute of the application. As an example, in case of attaching the captured picture to a text message (e.g., MMS), the controller 180 resizes the captured picture less than a first size (e.g., 700 kb) and can control the resized picture to be attached to the text message. As a different example, in case of attaching the captured picture to an e-mail, the controller 180 resizes the captured picture less than a second size (e.g., 1 Mb) and can control the resized picture to be attached to the e-mail.

In particular, the controller 180 can control the size of the captured picture to be automatically adjusted in accordance with the characteristic of the application to which the captured picture is applied.

### <Capturing a picture using a front camera 121 and a rear camera 121' at the same time>

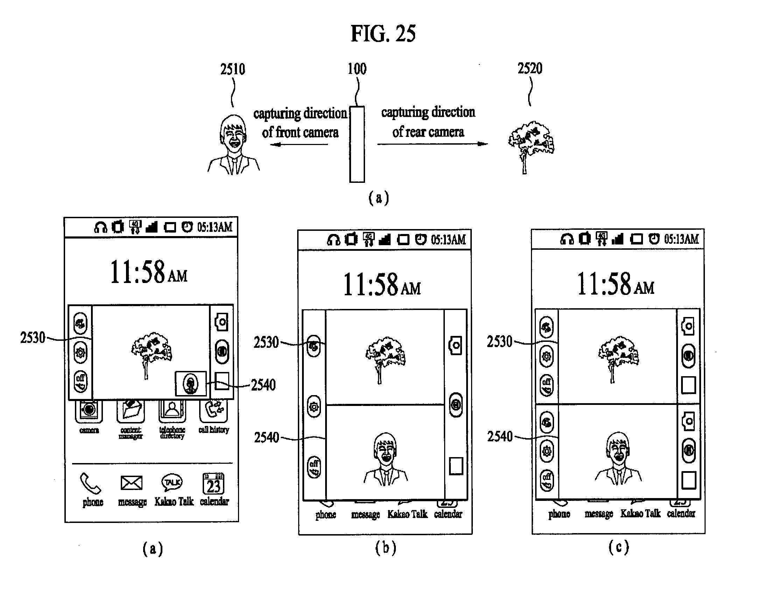

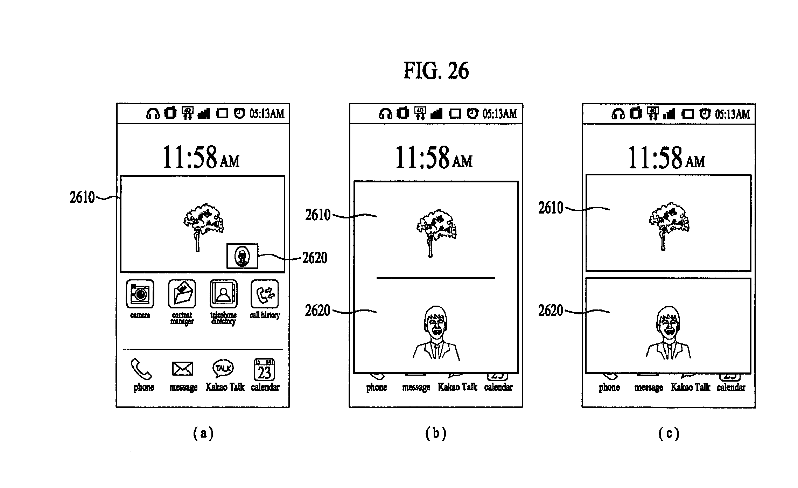

The mobile terminal 100 according to the present invention can take a picture selectively using either the front camera 121 or the rear camera 121'. Or, the mobile terminal can take a picture simultaneously using the front camera 121 and the rear camera 121'. In case of capturing a picture using the front camera 121 and the rear camera 121' at the same time, a preview image or a captured picture of the front camera 121 (or rear camera 121') can be provided as a sub image of a preview image or a captured picture of the rear camera 121' (or front camera 121) or both images can be provided independently. Regarding this, it shall be described in detail with reference to FIG. 25 and FIG. 26 in the following.

FIG. 25 is a diagram for an example that a preview image of a front camera 121 and a preview image of a rear camera 121' are simultaneously outputted when a first user input is inputted. For clarity, as depicted in an example of FIG. 25 (a), assume that an object to be captured via the front camera 121 corresponds to a person (i.e., photographer) 2510 and an object to be captured via the rear camera 121' corresponds to a tree 2520.

If a first user input is received in a state that both the front camera 121 and the rear camera 121' are configured to use, the controller 180 can control a preview image of the front camera and a preview image of the rear camera to be displayed at the same time. In this case, as depicted in an example of FIG. 25 (b), the controller 180 displays the preview image 2530 of the rear camera as a main image and may configure the preview image 2540 of the front camera as a sub image. Although it is not depicted in the drawing, it is apparent that the preview image of the front camera can be configured as a main image and the preview image of the rear camera can be configured as a sub image. As depicted in the example of FIG. 25 (b), the main image 2530 may have a size relatively smaller than a size of the sub image 2540. In this case, a user input inputted on the menu items may impact on both the main image 2530 (i.e., the front camera 121) and the sub image 2540 (i.e., the rear camera 121').

As a different example, as depicted in an example of FIG. 25 (c) and (d), the controller 80 may independently provide the preview image 2540 of the front camera from the preview image 2530 of the rear camera. In this case, the menu items for controlling the front camera and the menu items for controlling the rear camera can be provided in a manner of being integrated as depicted in the example of FIG. 25(c) or can be separately provided as depicted in the example of FIG. 25 (d).

As depicted in the example of FIG. 25 (c), if the menu items are provided in a manner of being integrated, a user input inputted on the menu items may impact on both the front camera 121 and the rear camera 121'. On the contrary, as depicted in the example of FIG. 25 (d), if the menu items are separately provided, the menu items for the front camera 121 may impact on the front camera 121 only and the menu items for the rear camera 121' may impact on the rear camera 121' only.

FIG. 26 is a diagram for an example of outputting a captured picture in case of capturing a picture using a front camera 121 and a rear camera 121' at the same time. If a capturing command is inputted in the examples depicted in FIG. 25 or if a second user input is inputted in a state that both the front camera 121 and the rear camera 121' are configured to use, the controller 180 can take pictures using the front camera 121 and the rear camera 121' at the same time.

In this case, the pictures 2610/2620 captured by the front camera 121 and the rear camera 121' can be merged into a single file or both pictures can be regarded as separate files. If the both pictures are merged into a single file, the controller 180 can generate a merged file in a manner of configuring one of the both picture 2610/2620 as a main image 2610 and configuring the other picture as a sub image 2620 as depicted in an example of FIG. 26 (a). As a different example, the controller 180 may merge the both picture 2610/2620 into a single picture file in a manner of attaching the both pictures to each other as depicted in an example of FIG. 26 (b) (FIG. 26 (b) shows an example that the picture 2620 captured by the front camera 121 and the picture 2610 captured by the rear camera 121' are connected to each other above and below). If the picture captured by the front camera 121 and the picture captured by the rear camera 121' are regarded as separate picture files, the both pictures 2610/2620 may be separately displayed as depicted in an example of FIG. 26 (c).

### <Capturing a picture with an output of a display 151 in the background>

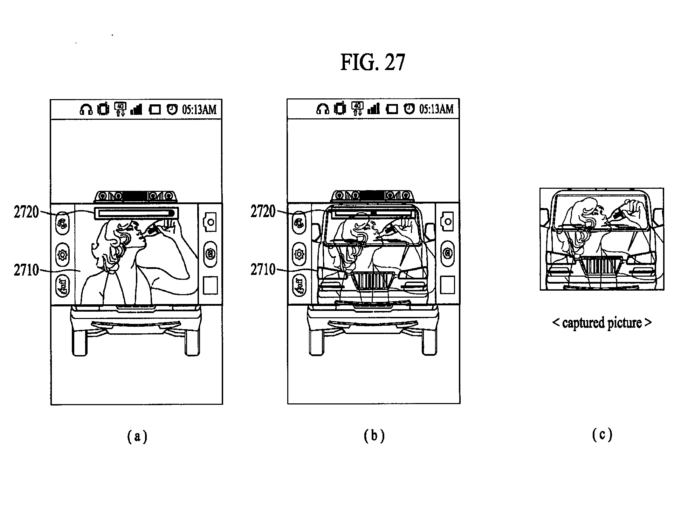

In case of capturing a picture, the mobile terminal 100 according to the present invention can take a picture with an output of the display 151 in the background. Regarding this, it shall be described in detail with reference to FIG. 27.

FIG. 27 is a diagram for explaining an example of capturing a picture with an output of a display in the background. As depicted in an example of FIG. 27 (a), if a first user input is inputted, the controller 180 can control a preview image 2710 to be displayed in the display 151. In this case, the controller 180 displays (FIG. 27 (a) shows an example that a menu item for controlling transparency of the preview image is represented as a bar form) the menu item 2720 for controlling the transparency of the preview image and can control the transparency of the preview image 2710 based on a user input inputted on the menu item 2720. As depicted in an example of FIG. 27 (b), if a capturing command is inputted when the preview image 2710 is configured as a translucent state, the controller 180 can control a picture to be captured with an output of the display 151 in the background. In this case, a part, which is configured as the background of the picture, may correspond to a part possessed by the preview image.

As depicted in FIG. 27, the controller 180 can take a picture using both an output of the display 151 and an image inputted via the camera 121.

### <Editing a captured picture>

The mobile terminal 100 according to the present invention can provide an editing screen capable of editing a picture which is captured via a first user input or a second user input. Specifically, the controller 180 can provide a user interface (UI) for determining a picture frame of the captured picture, a UI for attaching a sticker (i.e., clip art) to an editing item, and the like via the editing screen.

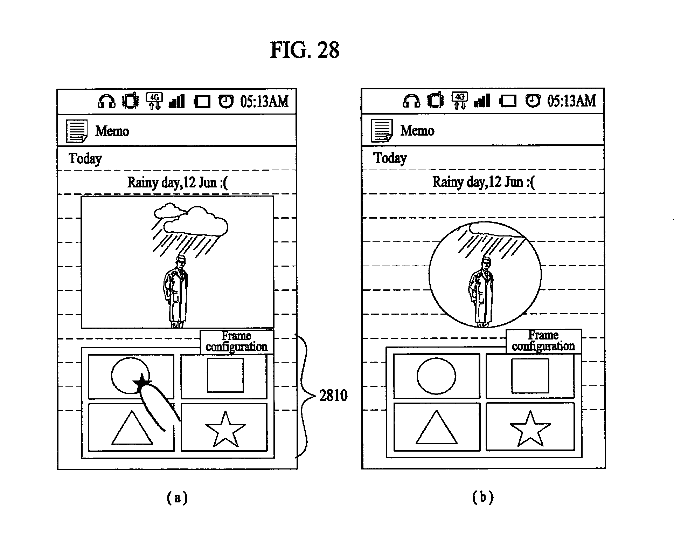

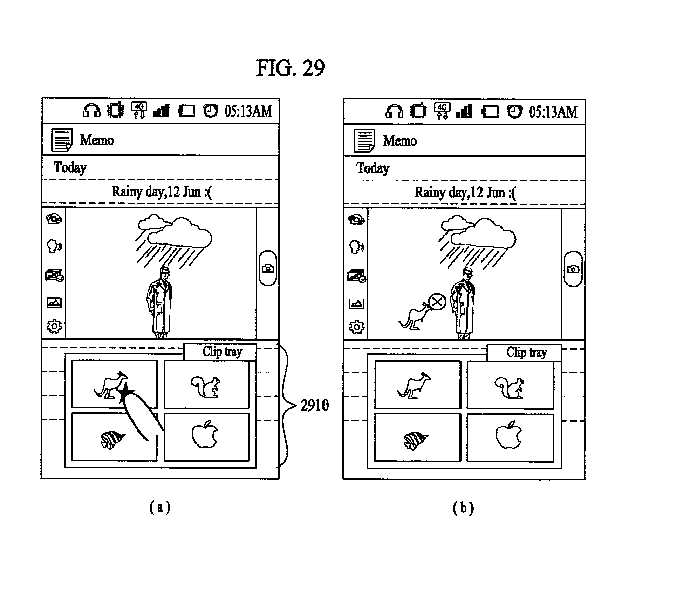

FIG. 28 and FIG. 29 are diagrams for a UI which is provided to an editing screen of a captured picture. As depicted in an example of FIG. 28, the controller 180 can provide a frame configuration UI 2810 to determine a frame of a captured picture. If a specific item is selected from the frame configuration UI 2810, the controller 180 can process the captured picture in accordance with the selected item. As an example, if a circle is selected from the frame configuration UI 2810 depicted in FIG. 28 (a), the controller 180 can control the captured picture to be edited to the circle as depicted in an example of FIG. 28 (b).

As depicted in an example of FIG. 29, the controller 180 may provide a clip art UI 2910 to determine a sticker capable of being attached to a captured picture. If a specific item is selected from the clip art UI 2910, the controller 180 can control the selected item to be attached to the captured picture (refer to FIG. 29 (a) and (b)).

### <Switching to a panorama mode>

If a user input for expanding a capturing area is received from a user while a preview image is displaying, the controller 180 can control a capturing mode of the camera to be switched to a panorama capturing mode. On the contrary, if a user input for reducing the capturing area is received from the user when the capturing mode of the mobile terminal 100 is set to the panorama capturing mode, the controller 180 can control the capturing mode of the camera to be switched from the panorama capturing mode to a general capturing mode.

Although it is not depicted, the user input for expanding the capturing area may correspond to a pinch out input for the preview image and the user input for reducing the capturing area may correspond to a pinch in input for the preview image.

Accordingly, embodiments of the present invention provide various effects and/or features.

According to one of the embodiments, the present invention can provide a mobile terminal for enhancing user convenience.

Specifically, the present invention can provide a mobile terminal capable of quickly capturing a picture without displaying a preview image.

Moreover, the present invention can provide a mobile terminal capable of automatically adjusting a focus and controlling a camera setting to correspond to intention of a user.

It will be appreciated by those skilled in the art that the present invention can be specified into other form(s) without departing from the spirit or scope of the inventions.

In addition, the above-described methods can be implemented in a program recorded medium as processor-readable codes. The processor-readable media may include all kinds of recording devices in which data readable by a processor are stored. The processor-readable media may include ROM, RAM, CD-ROM, magnetic tapes, floppy discs, optical data storage devices, and the like for example and also include carrier-wave type implementations (e.g., transmission via Internet).

It will be appreciated by those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A mobile terminal, comprising:
a camera configured to capture a picture;
a display configured to display information; and
a controller configured to control the display, before capturing a picture, to display a preview image inputted via the camera in response to a first input, **characterized in that** the controller is further configured, in response to a second input, to skip to display the preview image, and to instead capture a picture and control the captured picture to be displayed on the display together with the preview image after the picture is captured.

2. The mobile terminal of claim 1,
wherein the camera includes a first camera to capture a picture from a first side of the mobile terminal and a second camera to capture a picture from a second side of the mobile terminal, and,
wherein in response to receiving the second input, the controller is to selectively use one of the first camera and the second camera or the controller is to control the picture to be captured using both the first camera and the second camera.

3. The mobile terminal of claim 2,
further comprising a sensing unit to sense an orientation of the mobile terminal,
wherein in response to receiving the second input when the mobile terminal is determined to be substantially in a horizontal orientation, the controller is to control the picture to be captured by one of the first camera and the second camera, and
wherein in response to receiving the second input when the mobile terminal is determined to be substantially in a vertical orientation, the controller is to control the picture to be captured by the other one of the first camera and the second camera.

4. The mobile terminal of claim 2,
further comprising a sensing unit to sense at least one grip on the mobile terminal,
wherein in response to receiving the second input while the mobile terminal is determined to be gripped by two hands, the controller is to control the picture to be captured by one of the first camera and the second camera, and
wherein in response to receiving the second input while the mobile terminal is determined to be gripped by one hand, the controller is to control the picture to be captured by the other one of the first camera and the second camera.

5. The mobile terminal of any one of claims 1 to 4,
wherein the controller is to automatically adjust a setting of the camera based on at least one of an amount of light around the mobile terminal, a moving speed of the mobile terminal, and a subject intended to be captured.

6. The mobile terminal of any one of claims 1 to 5,
wherein in response to the second input, the controller is to control the camera to capture a plurality of pictures while the second input is maintained.

7. The mobile terminal of claim 6,
wherein the controller is to control the camera to capture the plurality of pictures by varying a focal length of a camera lens.

8. The mobile terminal of any one of claims 1 to 7,
wherein in response to receiving the second input while a prescribed data is selected, the controller is to control the picture to be captured by focusing on a subject associated with the selected data.

9. The mobile terminal of any one of claims 1 to 8,
wherein in response to receiving the second input and a voice, the controller is to control the picture to be captured by focusing on a subject associated with the voice.

10. The mobile terminal of claim 1,
wherein the controller is to control the captured picture to be overlaid on the preview image.

11. The mobile terminal of claim 1,
wherein when the captured picture is determined as being distorted, the controller is to control the camera to automatically capture a picture again.

12. The mobile terminal of claim 1,
wherein when the captured picture is determined as being distorted, the controller is to control a feedback to be outputted to indicate distortion of the captured picture.

13. The mobile terminal of any one of claims 1 to 12,
wherein in response to receiving the second input while a messenger application is being executed, the controller is to control the captured picture to be automatically transmitted to an counterpart which communicates with the mobile terminal via the messenger application.

14. The mobile terminal of any one of claims 1 to 13,
wherein when the second input is received while a document is being edited, the controller is to control the captured picture to be attached to the document.

15. A method of controlling a mobile terminal, comprising:
receiving a user input;
in response to receiving the user input, capturing a picture with skipping to display a preview image inputted via the camera, and
displaying the captured picture together with the preview image after the picture is captured.
